# EUROPEAN PATENT SPECIFICATION

(11) **EP 0 363 647 B1**
(45) Date of publication and mention of the grant of the patent: **15.12.1993**
(21) Application number: 89116540.9
(22) Date of filing: 07.09.1989
(51) Int. Cl.: C10M 105/54, C10M 111/00, C10M 169/04

(54) **Fire resistant hydraulic fluids**
Feuerbeständige hydraulische Flüssigkeiten
Fluides hydrauliques résistant au feu

(30) Priority: 14.10.1988 US 258267
(43) Date of publication of application: 18.04.1990
(73) Proprietor: ATOCHEM NORTH AMERICA, INC. (a Pennsylvania corp.), Philadelphia Pennsylvania 19102 (US)
(72) Inventor: Bohen, Joseph Michael, King of Prussia, PA 19406 (US)
(74) Representative: Kraus, Walter, Dr.

(56) References cited:
- WO-A-89/02887
- FR-A- 2 376 895
- US-A- 2 837 482

## Description

This invention relates to flame (fire) resistant hydraulic fluid compositions that comprise at least one polyhaloaromatic ester.

Hydraulic fluids find use wherever there is a need to transfer pressure from one point to another in a system. Some of the many commercial applications where hydraulic fluids are utilized are in aircraft, braking systems, compressors, machine tools, presses, draw benches, jacks, elevators, die-castings, plastic moldings, welding, coal-mining, tube reducing machines, paper-machine press rolls, calendar stacks, metal working operations, fork lifts, automobiles, etc.

The use of fire resistant hydraulic fluids is well known in industry. They are needed in those applications where it is necessary to reduce or minimize fire and explosion hazards that may result from leaking, misting or spraying hydraulic fluids onto a hot surface. Examples of applications where fire resistant hydraulic fluids are used are in aircraft and in steel rolling mills as well as high pressure systems such as in die casting machines, hydroelectric turbines, hydraulic presses, and compressors.

A widely used class of fire resistant hydraulic fluids is the phosphate esters or blends containing such, exemplified by US-A-2,862,886; US-A-4,370,281; and US-A-4,645,615.

Halogenated fluids have also found use as fire resistant hydraulic fluids. These include chlorinated, brominated, as well as fluorinated types and also are exemplified by US-A-2,528,347; US-A-4,577,044; and US-A-4,596,664.

The esters of polyhaloaromatic acids useful in this invention have been used as flame-proofing materials for unrelated materials. For example, US-A-4,098,708 describes the use of haloester compounds as flame retardant textile finishing agents. US-A-4,298,517 and US-A-4,397,977 disclose using haloester compounds as flame retardants for halogenated resins. There are no known references disclosing the use of esters of polyhaloaromatic acids as fire resistant hydraulic fluids per se, or as components of fire resistant hydraulic fluid compositions.

WO-A 89/02887 describes a process for the preparation of esters of polyhalophthalic acids, polyhalobenzoic acids, and polyhalophthalic anhydride useful as flame retardants for thermoplastic and thermosetting resins, which comprises the reaction of the above acids or anhydride with alcohols in the presence of certain metal and metallorganic compounds as catalysts.

FR-A-2 376 895 discloses chemical fluid compositions comprising silicones and polyhalophthalate esters. Said compositions are intended to improve the frictional properties in metal-metal contacts.

US-A-2,837,482 describes compositions comprising a liquid organo-substituted polysiloxane, for example, a liquid, non-resinous organo-substituted polysiloxane containing an average of from 1.9 to 2.67 organic groups per silicon atom, and having incorporated therein a chlorinated aromatic compound selected from the class consisting of octyltetrachlorobenzoate, dioctyltetrachlorophthalate (bis-2-ethyl-hexyl tetrachlorophthalate), and mixtures thereof.

According to one aspect, the present invention provides a fire retardant hydraulic fluid composition comprising at least one fire resistant polyhaloaromatic ester and from 0% to 99% by weight of a hydraulic fluid selected from: (A) mineral oils; (B) poly-α-olefins; (C) cycloaliphatics; (D) alkylated aromatics; (E) esters of dibasic acids; (F) silicate esters; (G) polyol esters; (H) polyglycol esters; (I) phosphate esters; and (J) organohalides other than polyhaloaromatic esters.

According to another aspect, the present invention provides the use of a composition comprising at least one fire resistant polyhaloaromatic ester and from 0% to 99% by weight of a hydraulic fluid selected from: (A) mineral oils; (B) poly-α-olefins; (C) cycloaliphatics; (D) alkylated aromatics; (E) esters of dibasic acids; (F) silicones; (G) silicate esters; (H) polyester fluids; (I) polyglycol fluids; (J) phosphate esters; or (K) organohalides other than polyhaloaromatic esters, as a fire retardant hydraulic fluid.

According to the present invention, fire resistant hydraulic fluids having high autoignition temperatures, low volatility, and low flame propagation rates are provided.

When the polyhaloaromatic esters are combined with hydraulic fluids, they comprise at least 1 wt.%, preferably at least 10 wt.%, most preferably at least 20 wt.%, of the weight of the combination.

An important consideration for a fire-resistant hydraulic fluid is that its autogenous ignition (autoignition) temperature should be above about 400°C (750°F). [See US-A-3,730,889]. This and other important properties such as appropriate lubricating viscosity under high and low temperature conditions, stability at high temperatures, lubricating ability, oxidation stability, compatibility with materials of construction (e.g., metals, elastomers), antiwear properties, corrosion resistance, etc. may be achieved by the compositions of this invention by utilizing the proper combination of components.

In another embodiment, the fire resistant properties of known hydraulic fluid compositions can be improved by the addition of the inventive esters of polyhaloaromatic acid per se, or the addition of the inventive combination compositions.

The halogen substituents on the aromatic esters are preferably chlorine or bromine, bromine being particularly preferred. Moreover, it is desirable that the halogen substituents comprise a large percentage of the ester, preferably at least 25 weight percent, more preferably at least 35 weight percent. In the case of the preferred bromine-substituted esters described below, the bromine may comprise in excess of 40 or 45 weight percent of the ester. The maximum halogen content achievable varies with the ester, and may be as high as 80 weight percent. The high weight percent of halogen is important since the halogen is believed to be largely responsible for the flame resistant properties.

Preferred esters of polyhaloaromatic acids useful as fire resistant hydraulic fluids per se or in the compositions of the present invention have one of the following formulas: 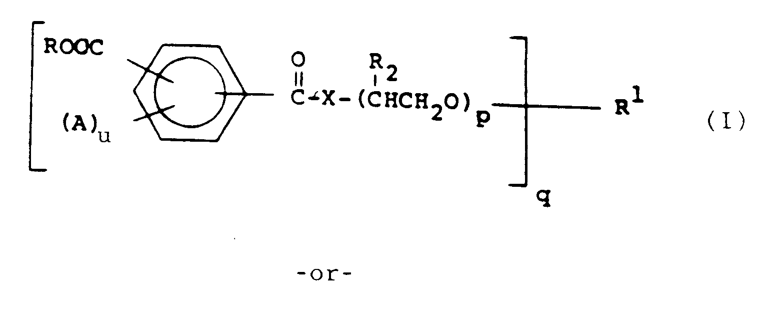 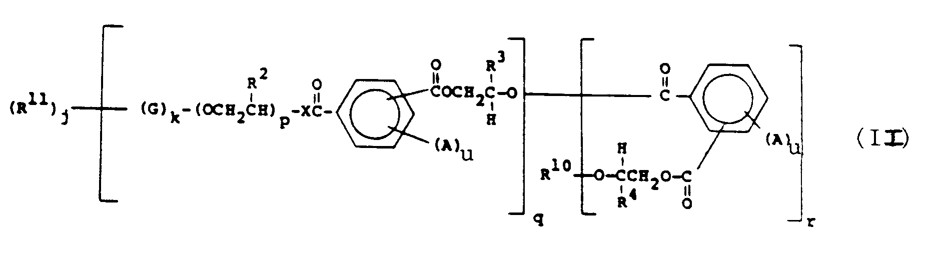
wherein:
(a) the rings can have all possible isomeric arrangements;
(b) R is unsubstituted C₁₋₃₀ alkyl, hydroxy C₂₋₂₀ alkyl, polyhydroxy C₃₋₁₀-alkyl, or 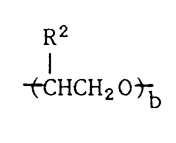 R⁸ where R⁸ is a substituted or unsubstituted C₁₋₁₈ alkyl, R² is as defined below, and b is 1 to 50;
(c) R¹ is H, branched, or linear unsubstituted saturated C₁₋₃₀ alkyl or unsaturated C₂₋₂₂ alkyl, or 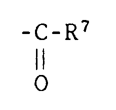 and R⁷ is as defined below,
(d) R², independently, is H or CH₃;
(e) R³ and R⁴ are, independently, H, C₁₋₁₈ alkyl, halogen substituted C₁₋₁₈ alkyl, OR⁵, or 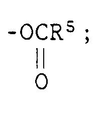
(f) R⁵ is C₁₋₂₂ alkyl;
(g) R⁶ is H or C₁₋₂₂ alkyl;
(h) R⁷ is C₁₋₁₈ alkyl, polyhydroxy C₃₋₁₂ alkyl, 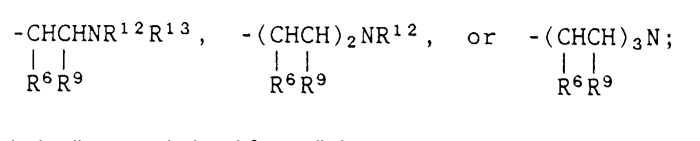
(i) R⁸ is branched or linear unsubstituted C₁₋₁₈ alkyl;
(j) R⁹ is H or C₁₋₂₂ alkyl;
(k) R¹⁰ is H, -CR⁵, or 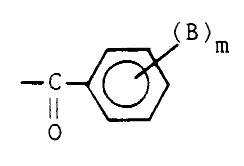 where B and m are defined below;
(l) R¹¹ is H, branched or linear unsubstituted C₁₋₃₀ alkyl, polyhydroxy -C₃₋₁₂-alkyl, 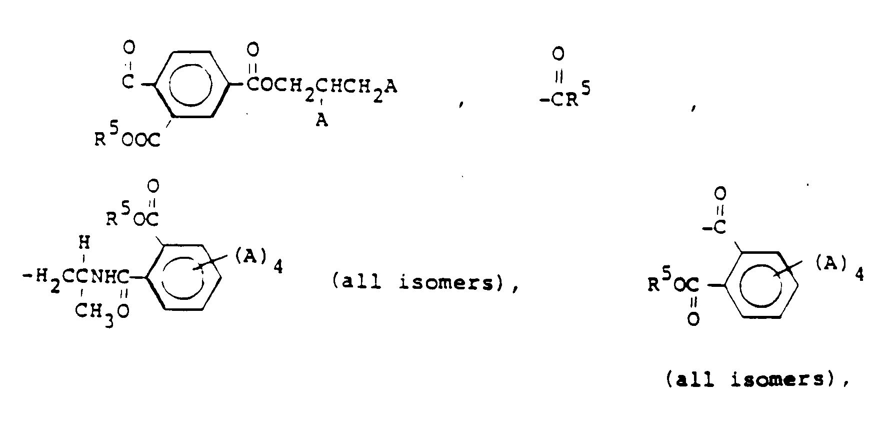 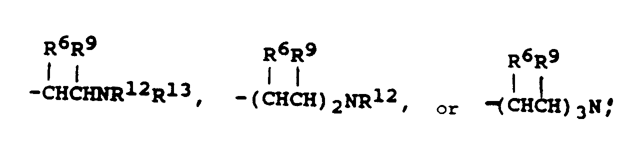
(m) R¹² is H or C₁₋₂₂ alkyl;
(n) R¹³ is H or C₁₋₂₂ alkyl;
(o) A is Cl or Br;
(p) B is halogen, OR⁵, or 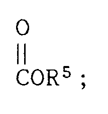
(q) G is 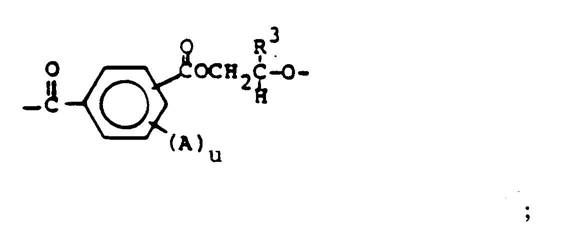
(r) X is O or NH;
(s) j is 0 to 1;
(t) k is 0 to 1; with the proviso that when j is 0 then k is 1 and when k is 0 then j is 1;
(u) m is 1 to 5;
(v) p is 0 or an integer of 1 to 50;
(w) q is an integer of 1 to 6;
(x) r is from more than 1 to 50; and
(y) u is 1 to 4.

The term "substituted" in the above moiety definitions refers to the inclusion of at least one ether, hydroxyl, ester, halo, amino, amido, or cyano moiety on the alkyl chain.

The esters described above may be used as the only components of the fire resistant hydraulic fluids or may be blended with one or more of the following known hydraulic fluids.
(A) Mineral Oils of varying lubricating viscosities.
(B) Poly-α-olefins (olefin oligimers) having the general formula: 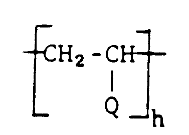 where h is 3 to 10 and Q is a C₄₋₁₀ alkyl.
(C) Cycloaliphatics in which an aliphatic hydrocarbon is substituted by at least one cycloalkyl (e.g., cyclohexyl). A typical example would be 2,3-dicyclohexyl-2-3-dimethylhexane; i.e. 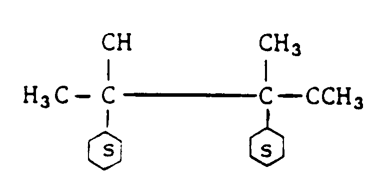
(D) Alkylated Aromatics in which one or more (preferably two or more) C alkyl moieties are substituted on the benzene ring. Preferred, compounds are 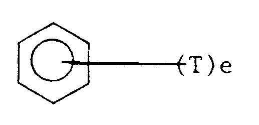 where T is a linear C₁₀₋₁₄ alkyl and e is >1.
(E) Esters of Dibasic Acids which are prepared by the reaction of a dibasic acid with a monohydroxy alcohol and have the general formula: 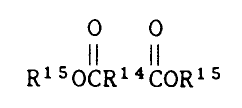 wherein R¹⁴ is C₄₋₈ alkylene and each R¹⁵ independently is C₈₋₁₃ alkyl. Typical examples of dibasic acids are adipic, azeleic, sebacic and of alcohols are 2-ethyhexyl, 3,5,5-trimethylhexyl, isodecyl, and tridecyl.
(F) Silicones (in case of the use of the composition), which are fluids having a polymer structure. A typical example of a silicone fluid is dimethylpolysiloxane. 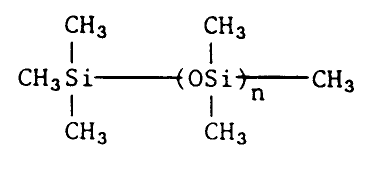 where n is >1.
   Many silicones are fire resistant by themselves.
(G) or (F) respectively Silicate esters having the general formula:

   (R¹⁶O)₄Si

   wherein R¹⁶ is C₁₋₃₀ alkyl or C₆₋₁₄ aryl
(H) or (G) respectively Polyol ester fluids formed by reacting a diol or polyol with a monocarboxylic acid. Two commonly used polyols are trimethylolpropane and pentaerythritol. The monocarboxylic acid should contain 5 to 30 (preferably 5 to 10) carbon atoms. Many other polyesters are suitable as a component of the compositions of this invention.
(I) or (H) respectively Polyglycol fluids (polyalkylene glycol ethers) of the formula 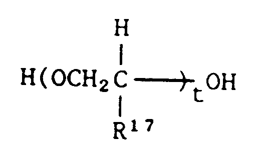 wherein R¹⁷ is H or C₁₋₃ alkyl and t is >1 to 50.
(J) or (I) respectively Phosphate Esters are one of the larger volume classes of synthetic lubricating fluids and comprise the largest segment of the water-free fire resistant hydraulic fluids market. They have the general formula: O=P-(OR¹⁸)₃ where R¹⁸ is independently C₁₋₃₀ alkyl, C₆₋₂₂ aryl. The most common class is when R¹⁸ is an aryl or substituted aryl.
(K) or (J) respectively Organohalides other than polyhaloaromatic esters are hydrocarbons which contain chlorine, bromine, or fluorine, or combinations thereof. This class of compounds is considered fire resistant.

According to the present invention, a composition wherein said hydraulic fluid is one or more of A, B, E, F, I, or J is preferred.

A more complete description of hydraulic fluids (A) to (K), inclusive, may be found in Kirk-Othmer "Encyclopedia of Chemical Technology", Third Edition, (pub.) Vol. 12, pp. 712-733 (1980).

The compositions of this invention may be prepared in any convenient manner such as uniformly blending under ambient conditions. Additives known in the art to improve other hydraulic fluid properties may be added if desired. Such additives may include but are not limited to viscosity modifiers, rust and oxidation inhibitors, defoamers, pour point depressants, dispersants, wear inhibitors, corrosion inhibitors, friction-reducing compounds, extreme pressure additives, and the like.

It is a preferred embodiment that in combination in the inventive ester of formula (I), R is C₁₋₁₂ alkyl or substituted alkyl, A is Br, X is oxygen, p is 0 to 20, and q is 1 to 6. More preferably R is:

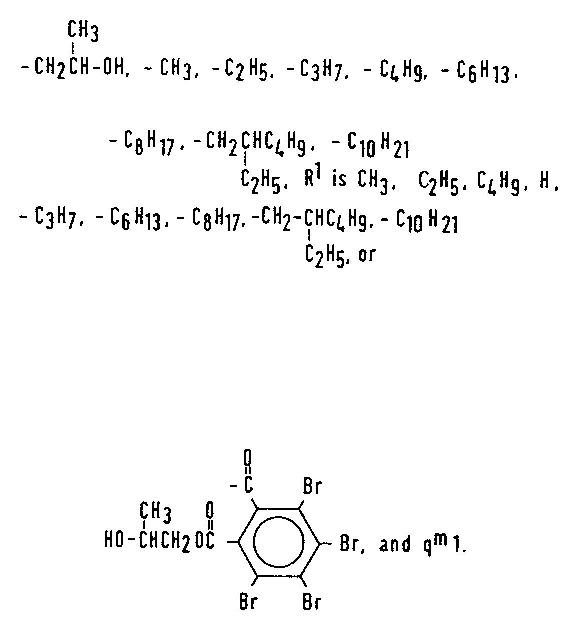

It is also a preferred embodiment that in combination in the inventive ester of formula (II), R¹¹ is hydrogen or C₁₋₂₂ alkyl or substituted alkyl; R³ and R⁴ are independently hydrogen, -CH₃, -CH₂Cl, -C₂H₅, -C₄H₉ or -C₈H₁₇; A is Br; X is oxygen; p is 0 to 20; q is 1 to 6; r is 0.10 to 5; and u is 2 to 4. More preferably R³ and R⁴ are independently H, -CH₃, or -CH₂Cl; q is 1, r is 0.25 to 2; and u is 4.

The inventive esters may be made by any known methods as exemplified in Examples 1-68.

The following formulas are for representative polyhaloaromatic esters which may be used in practicing this invention. The substituent moiety A is a halogen and is preferably bromine or fluorine, most preferably bromine. 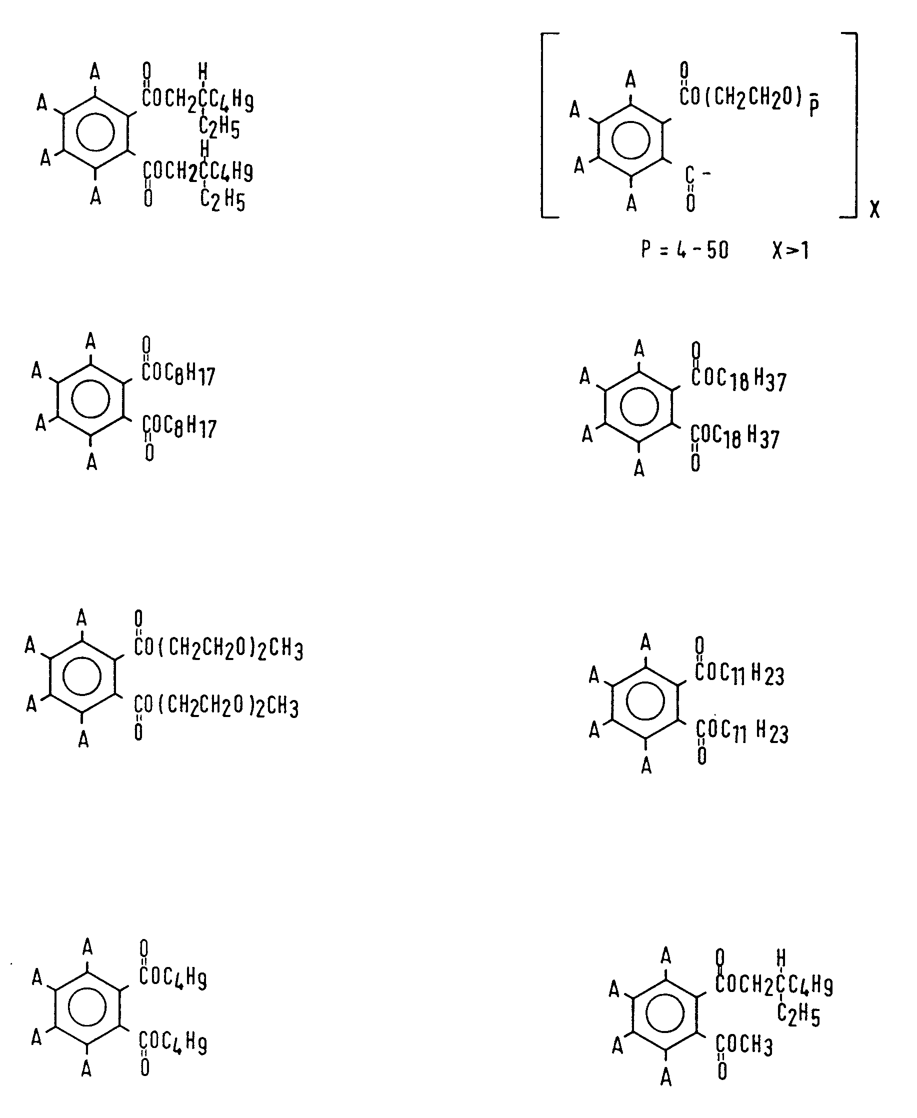 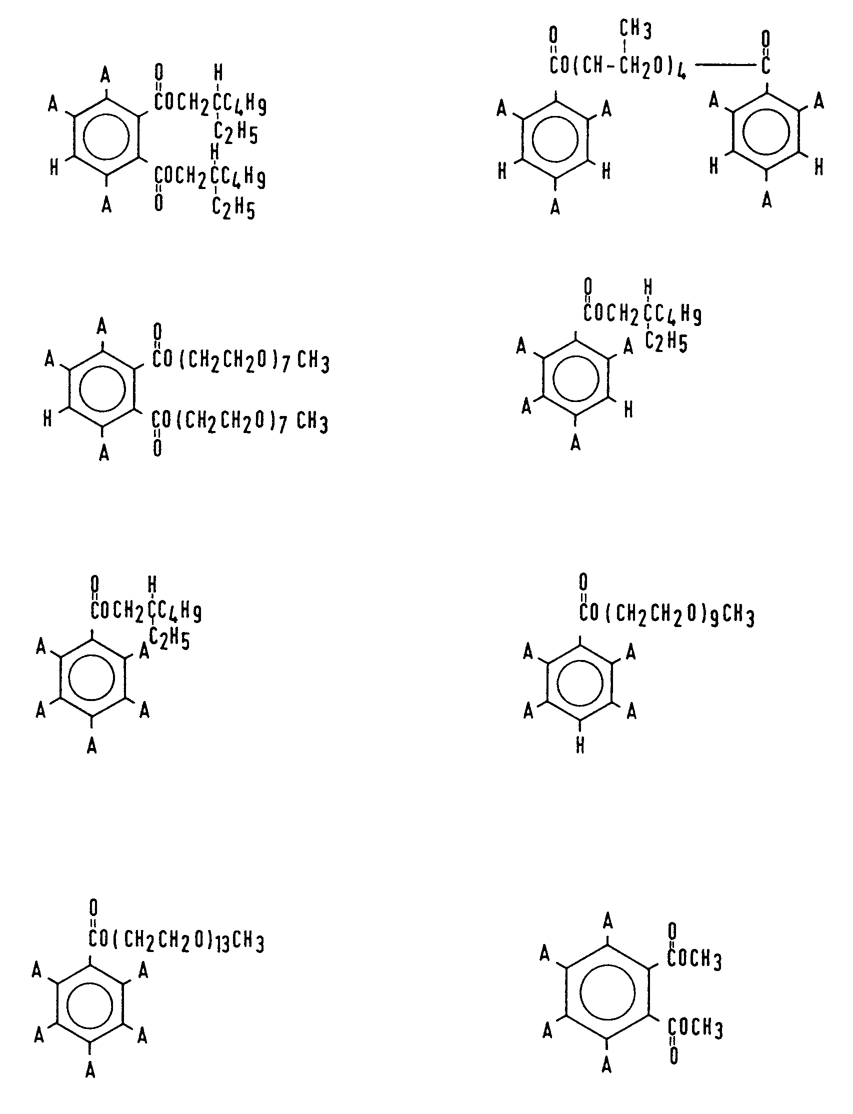 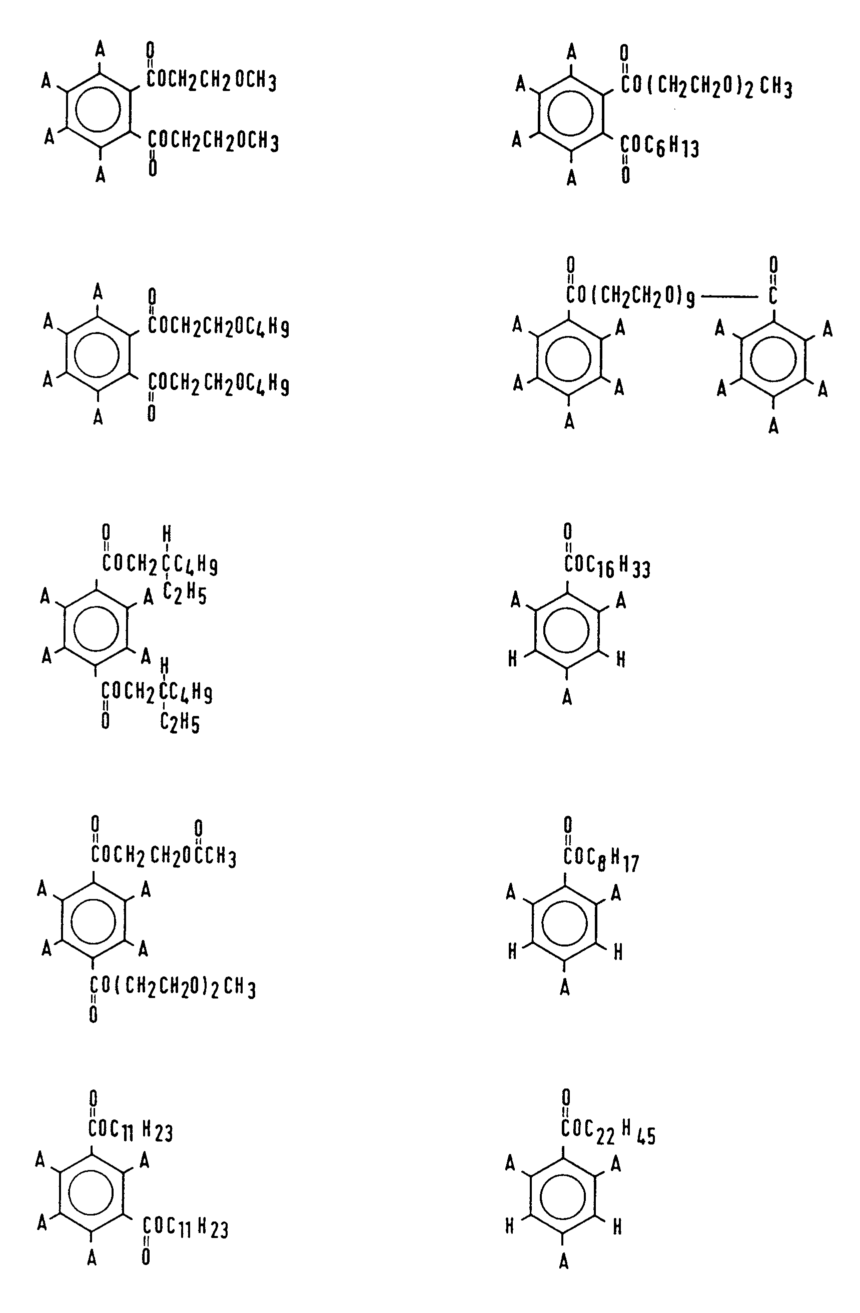 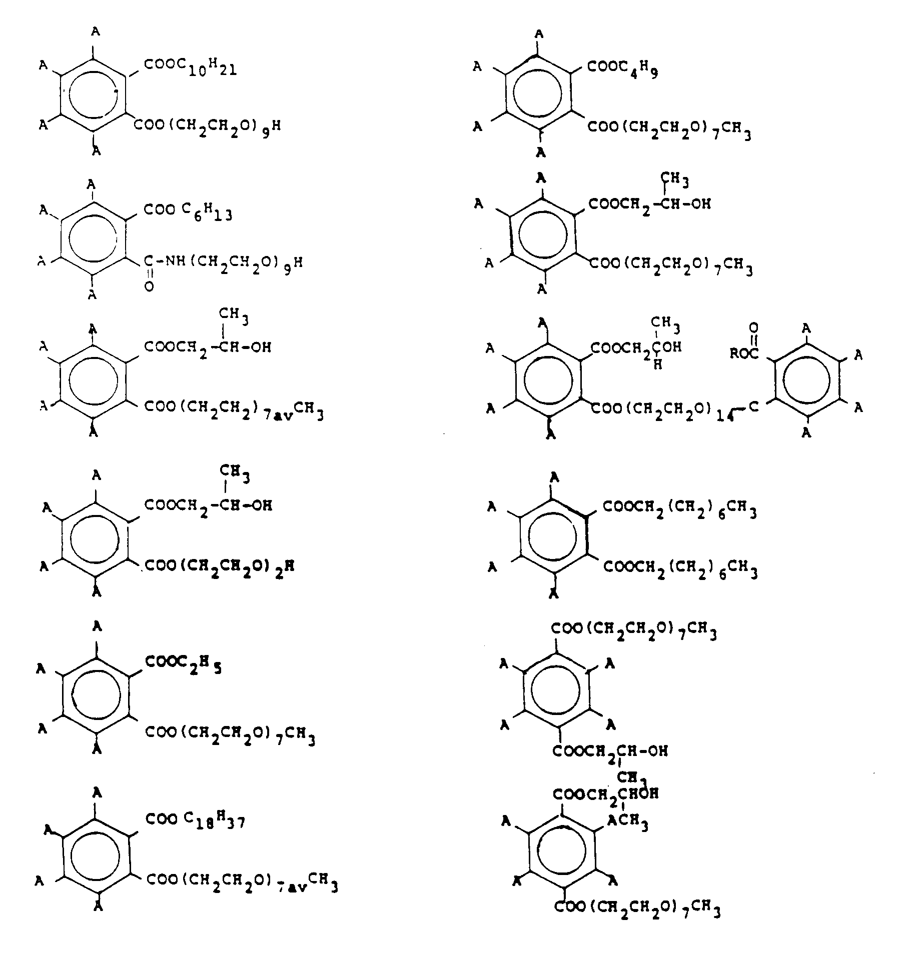 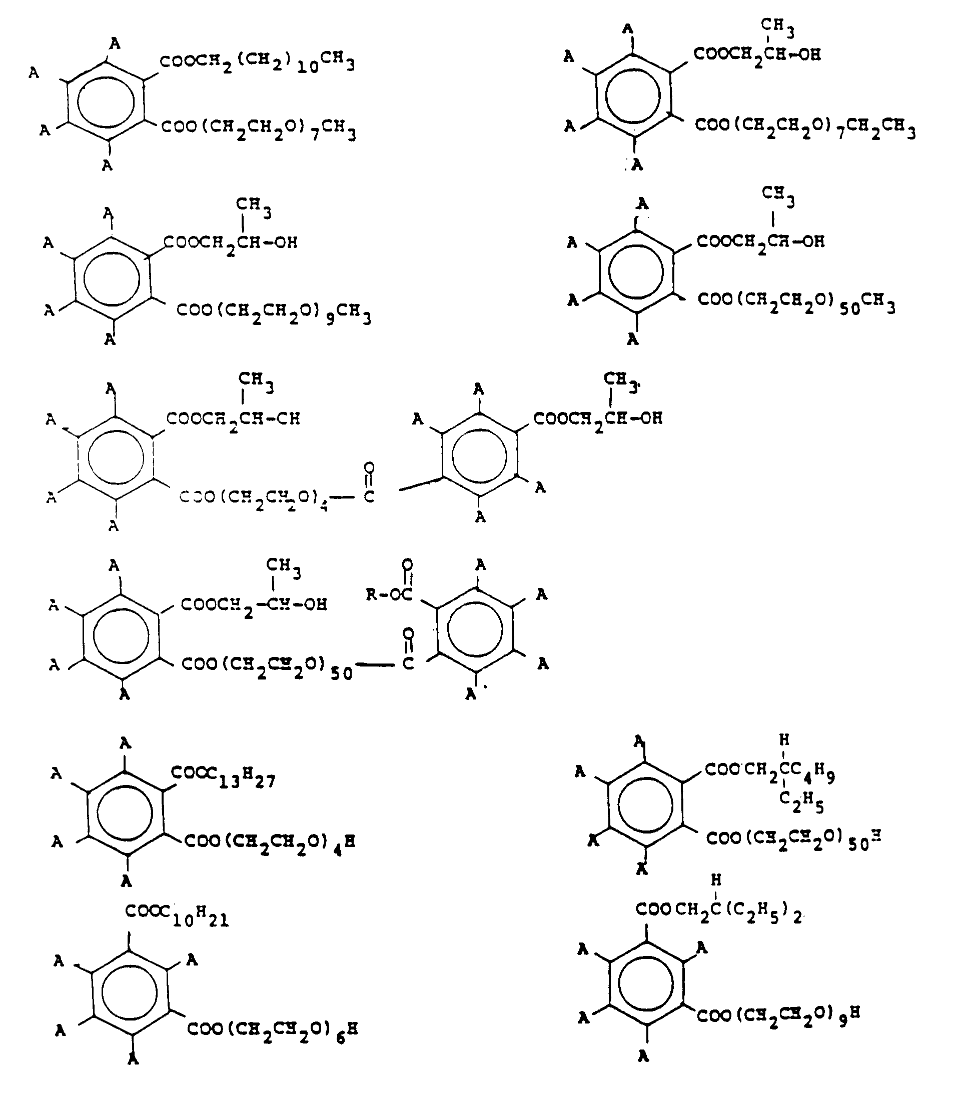 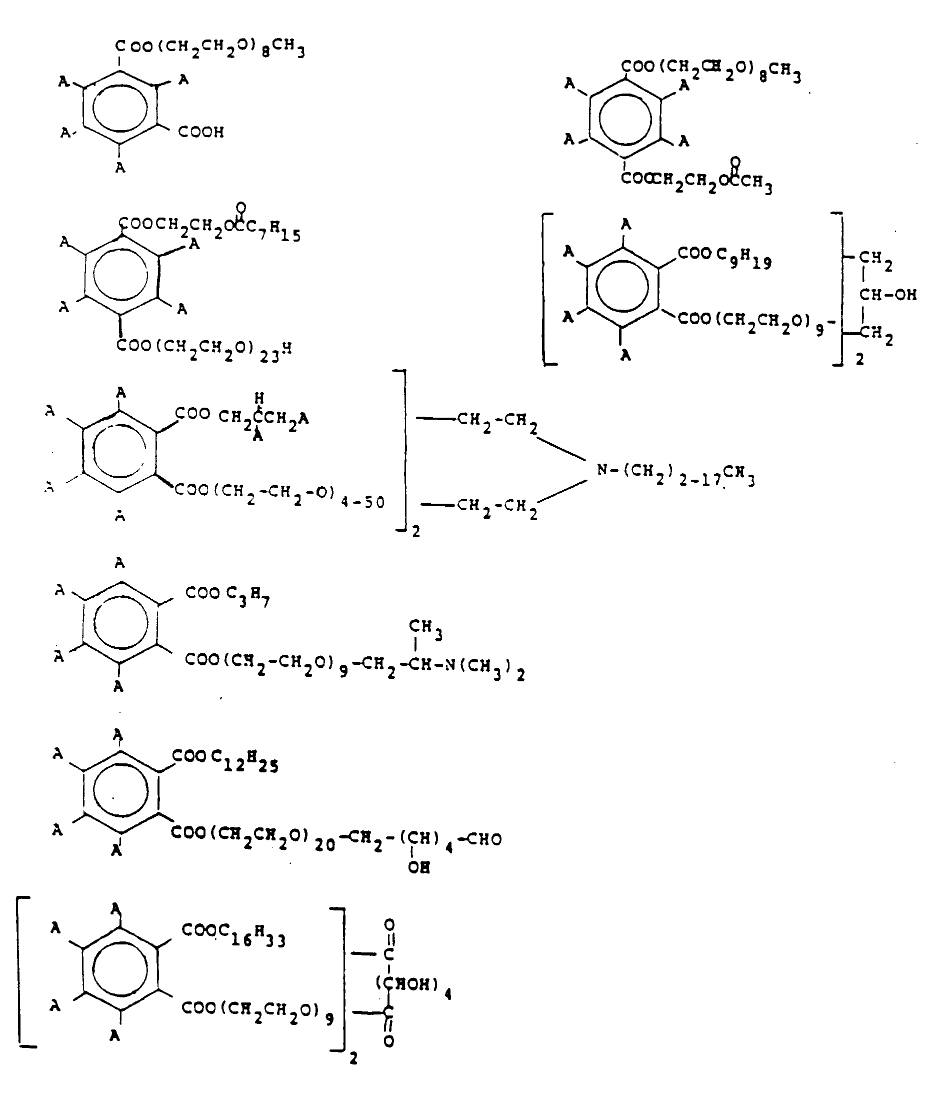 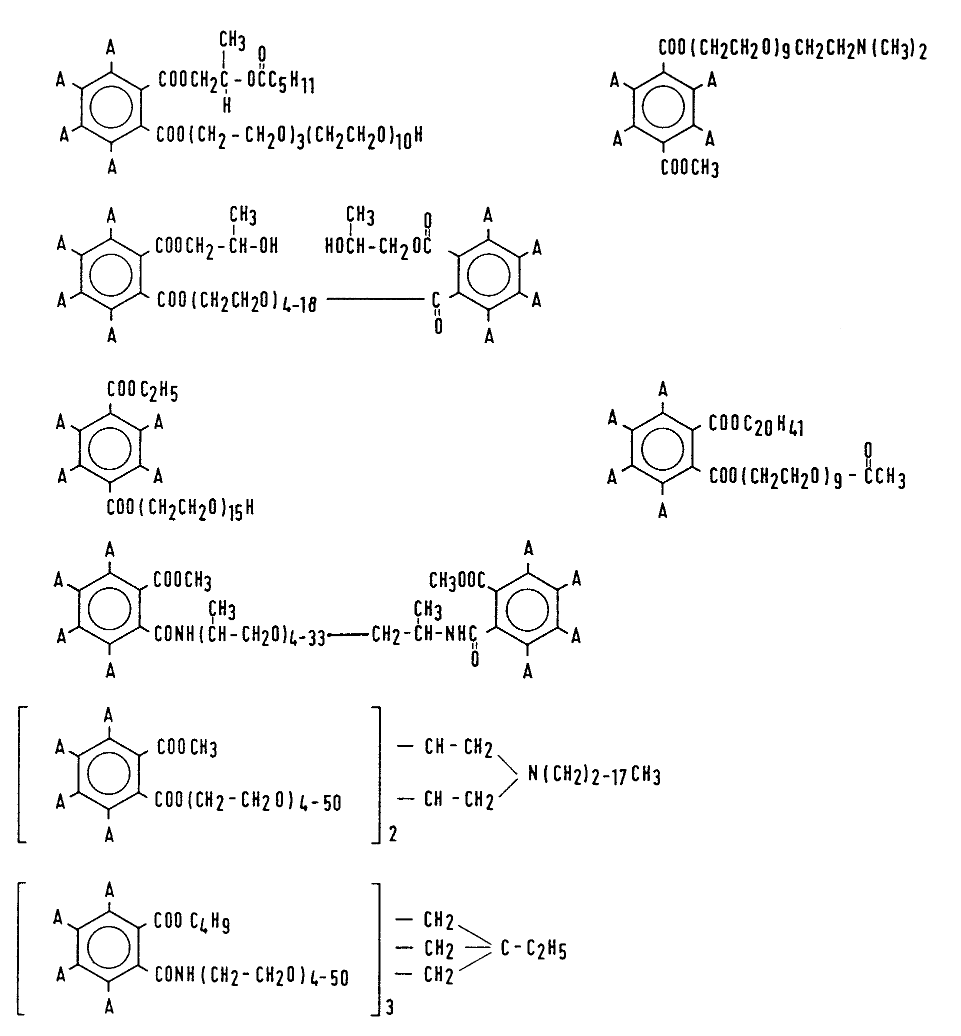 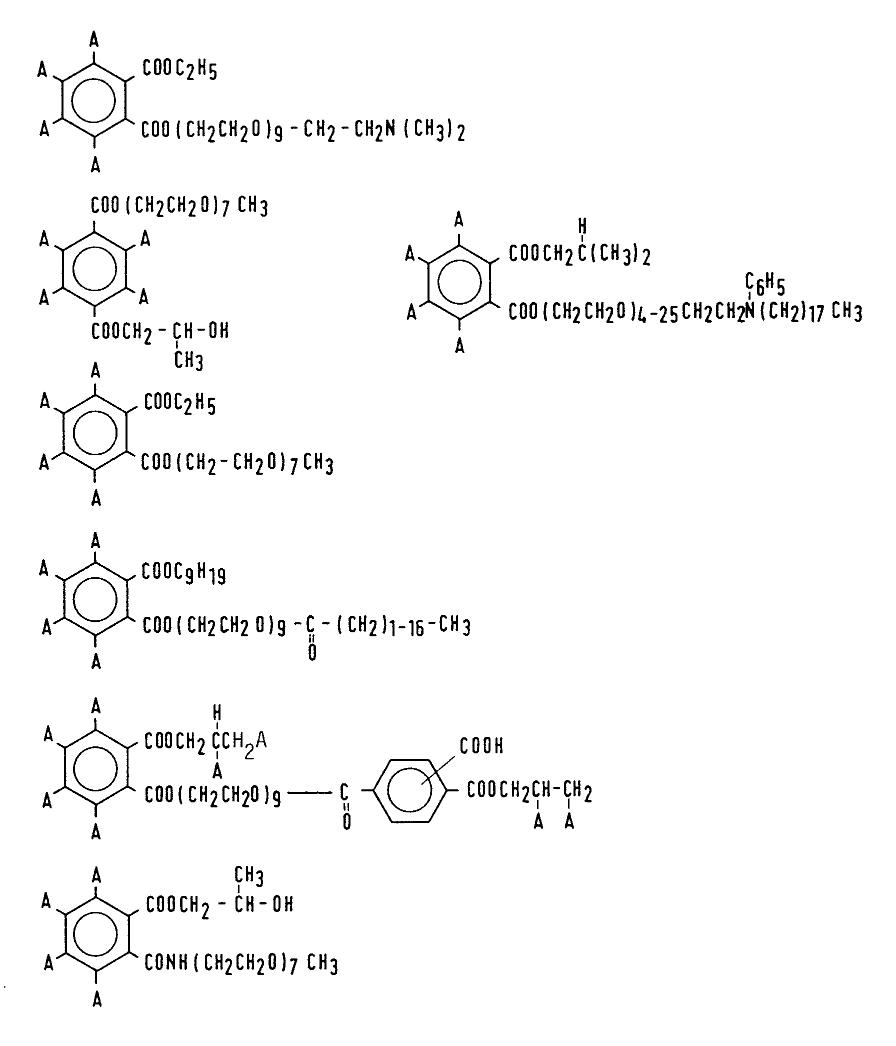
The preferred compounds are:

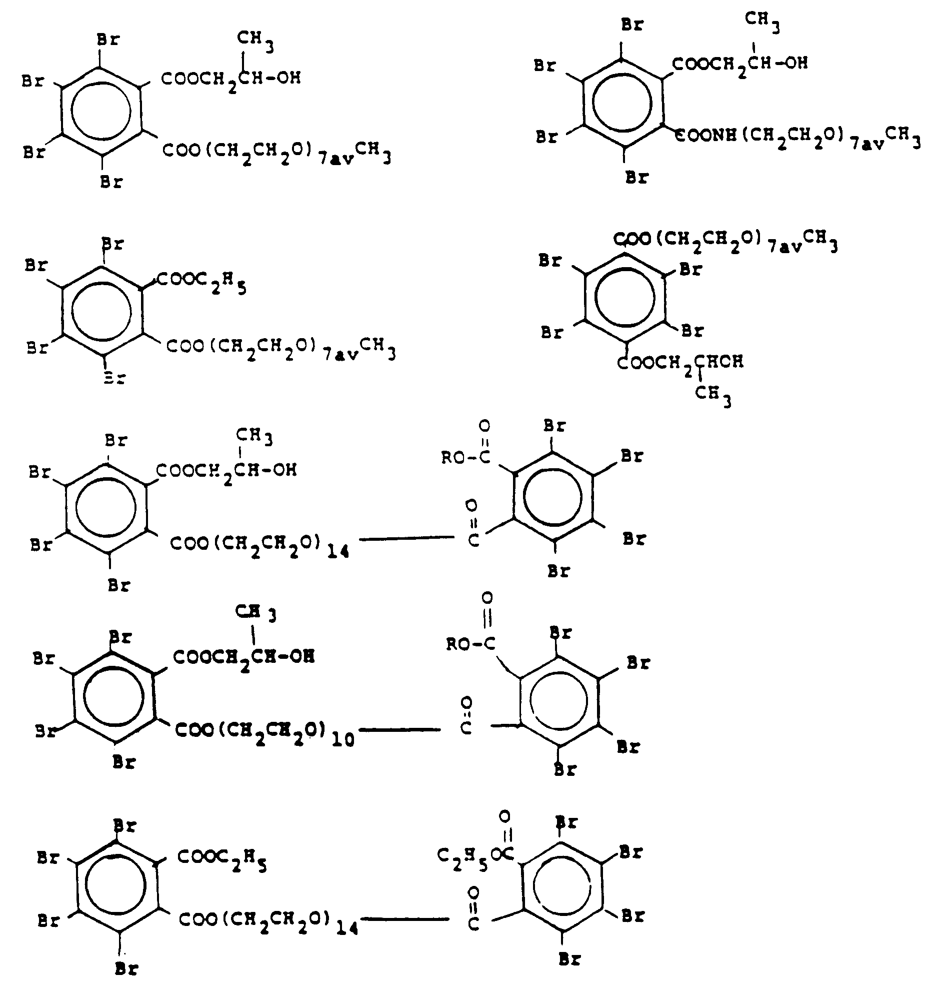

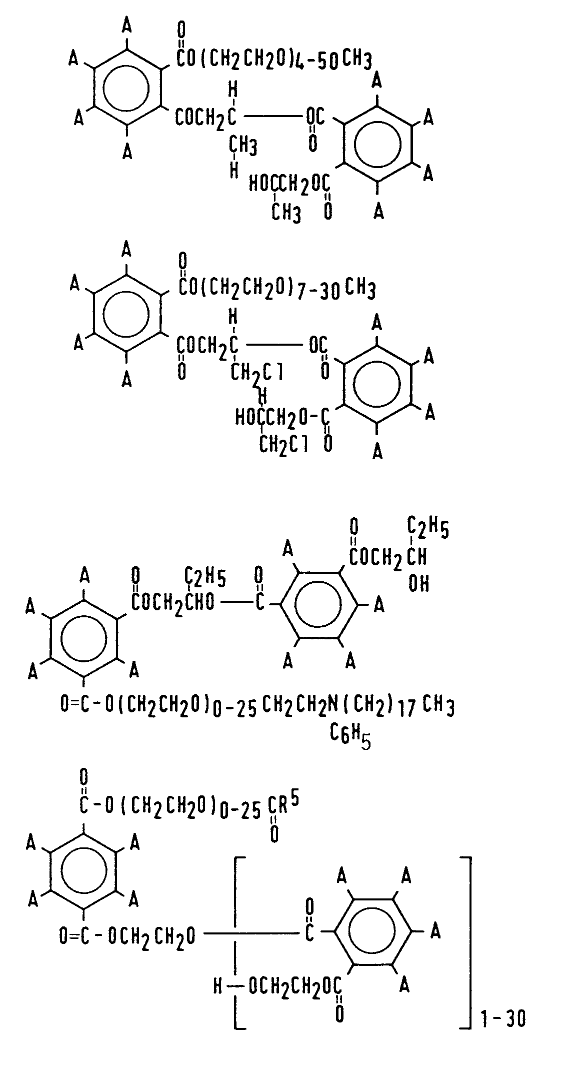

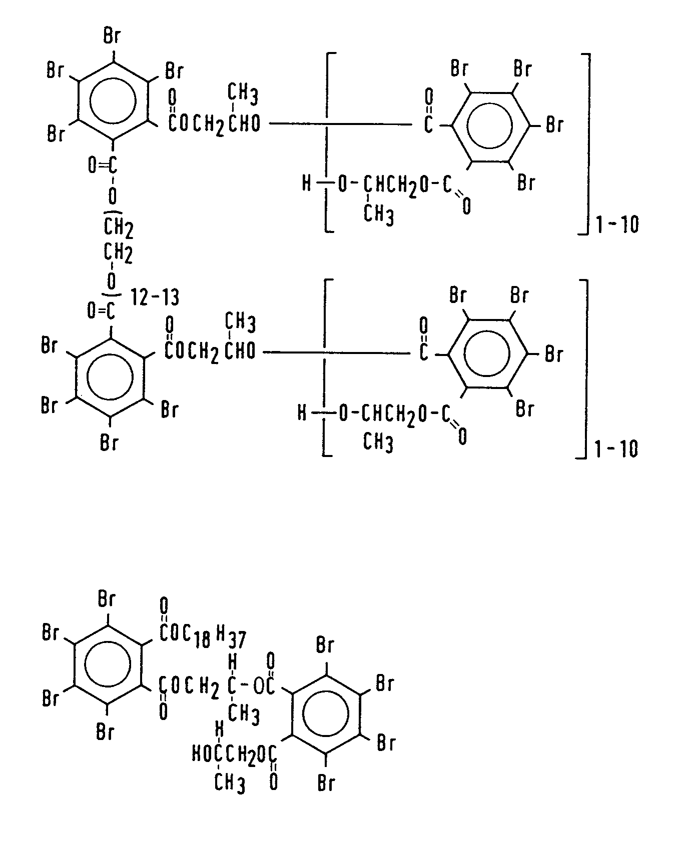

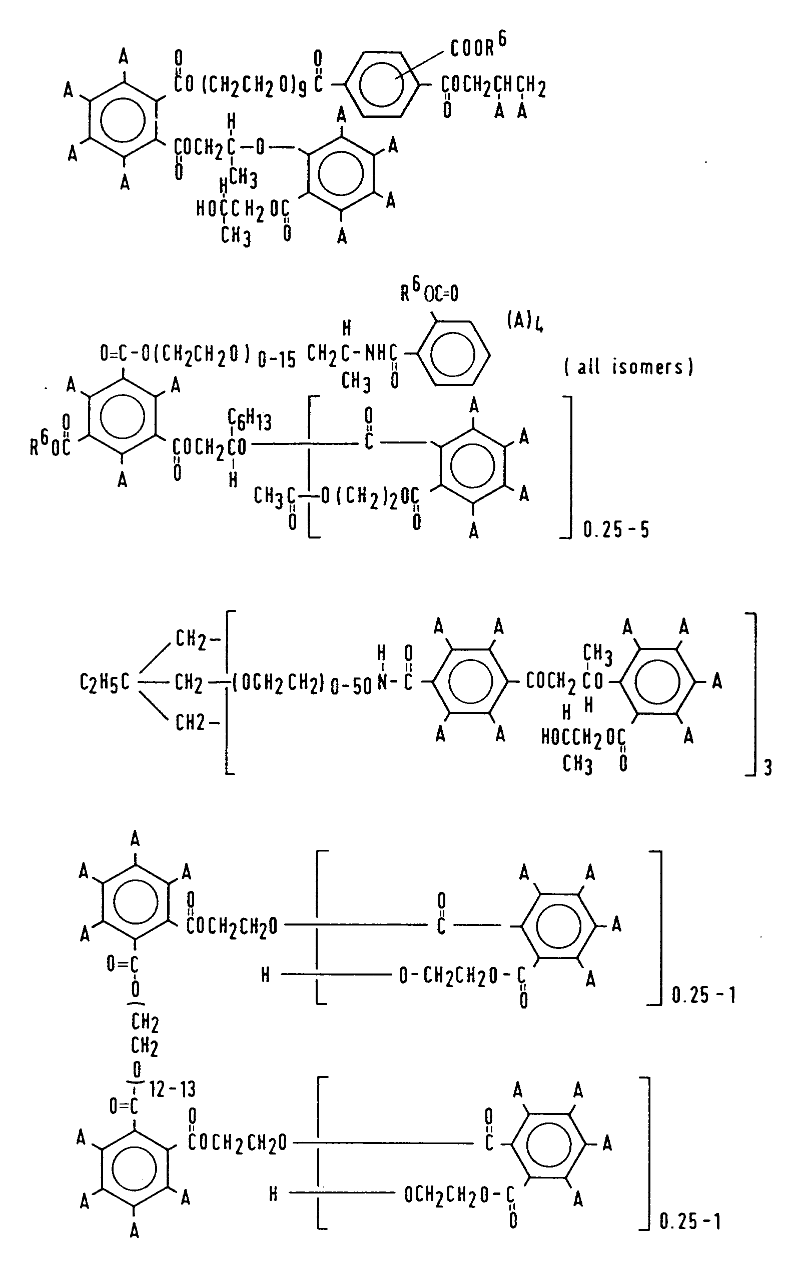

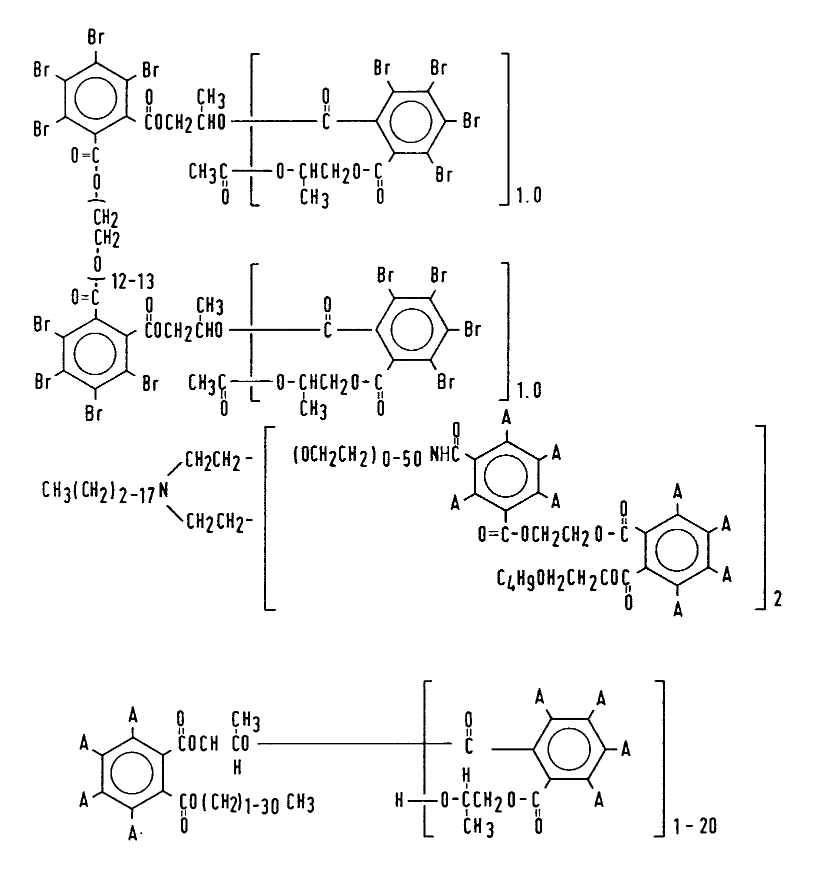

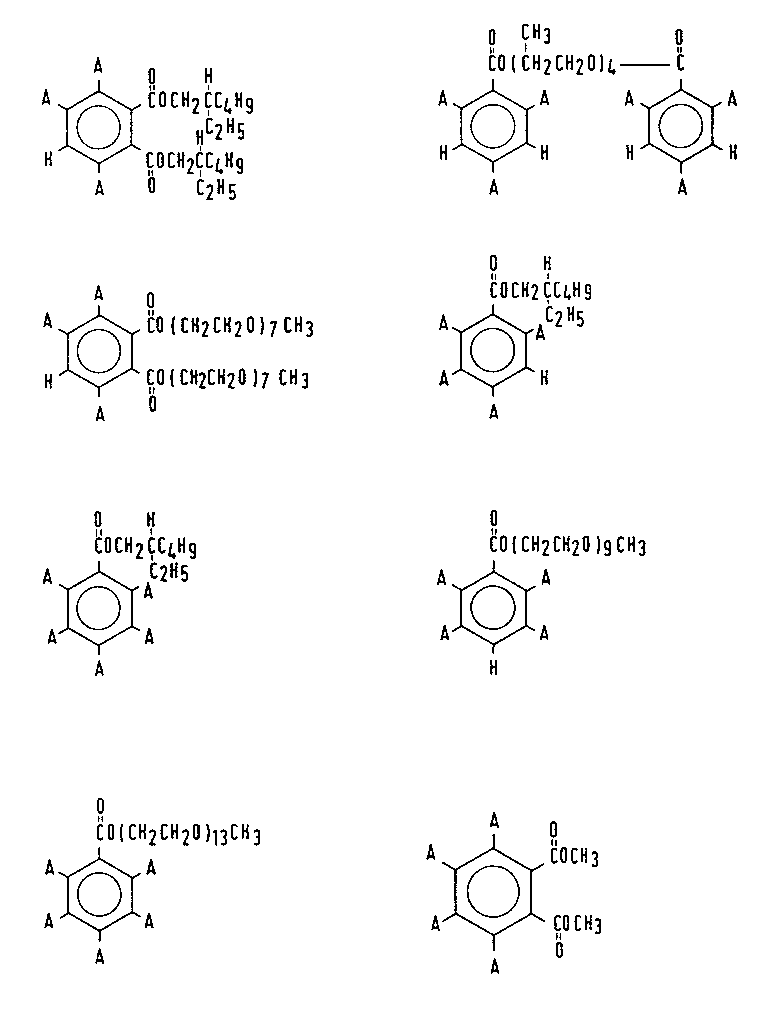

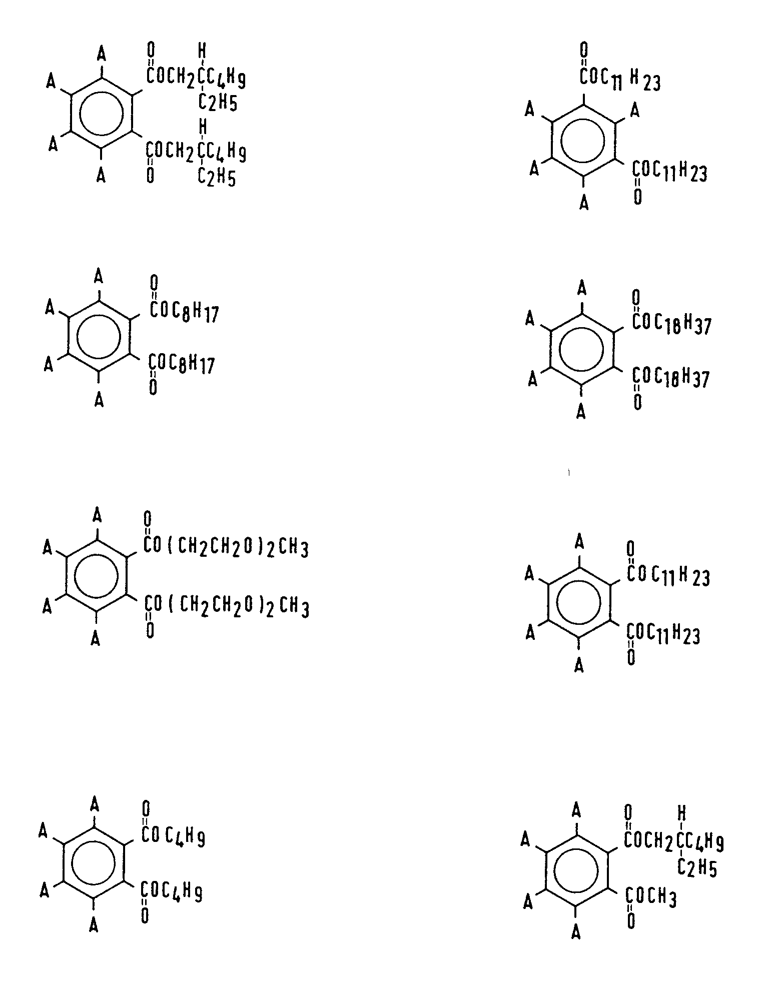

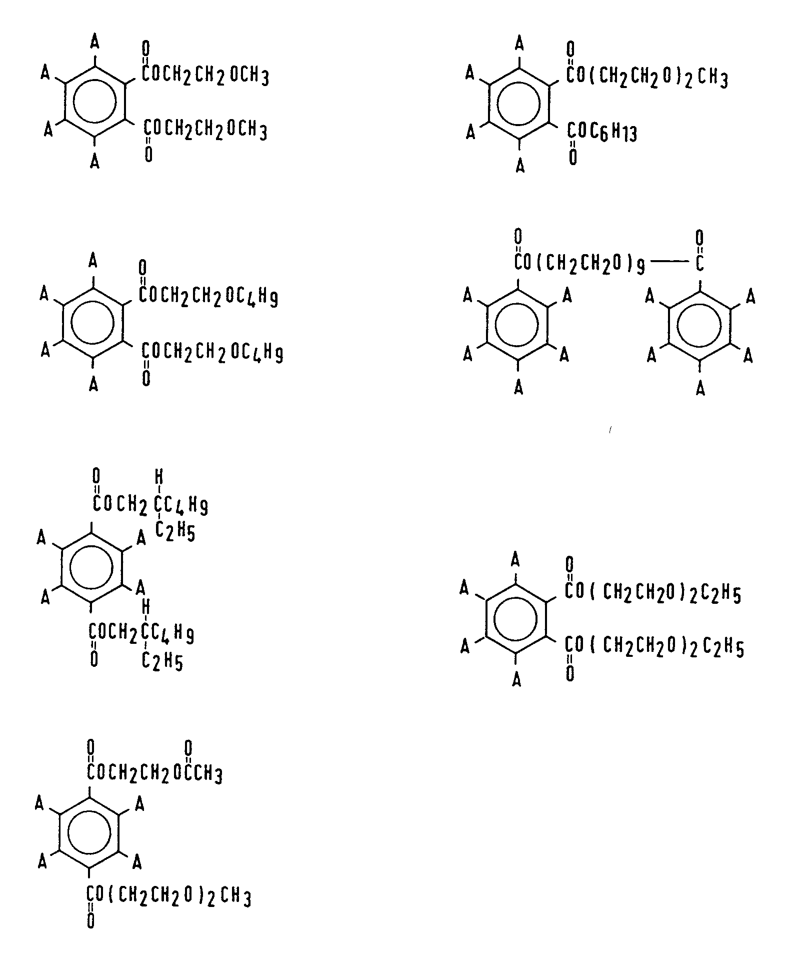

### Preparation of Inventive Esters

### Example 1

To 1,392 g (3.0 mols) of tetrabromophthalic anhydride were added 1,050 g (3.0 mols) of Methoxy "Carbowax" 350 in the presence of 22.0 g of sodium acetate. The mixture was heated at 90°C for 8 hours in a nitrogen atmosphere. The reaction mixture was filtered hot to remove the sodium acetate. The analytical data were consistent with the assigned structure. ["Carbowax" is a trademark of Union Carbide Corp. for polyethylene glycols and methoxypolyethylene glycols, the number following being the approximate polymer molecular weight.]

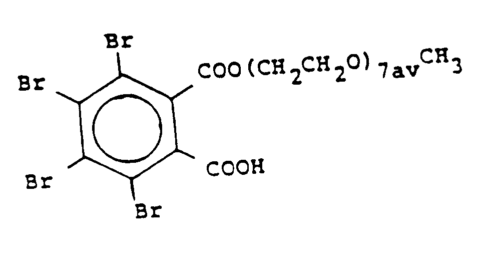

### Example 2

To the compound of Example 1 were added 348.0 g (6.0 mols) of propylene oxide and 2.0 liters of toluene. The mixture was heated at 60°-100°C. The solvent and residual propylene oxide were removed to give the product in almost quantitative yield. The analytical data were consistent with the assigned structure:

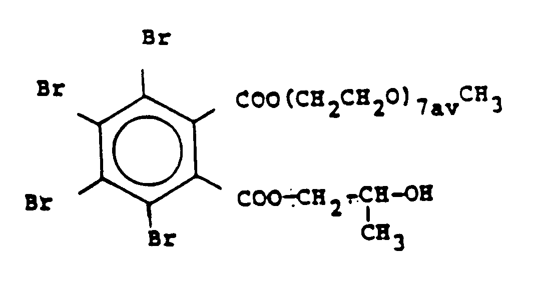

### Example 3

To 92.8 g (0.2 mol) of tetrabromophthalic anhydride was added all at once 80 g (0.2 mol) of "Carbowax" 400 and the mixture heated to 120°-130°C for 2.5 hours. The desired product was isolated in essentially quantitative yield as a clear yellow viscous liquid. Calcd. Mol. Wt., 864; found 865. Calcd. % Br, 371; found, 38.5. The analytical data were consistent with the assigned structure:

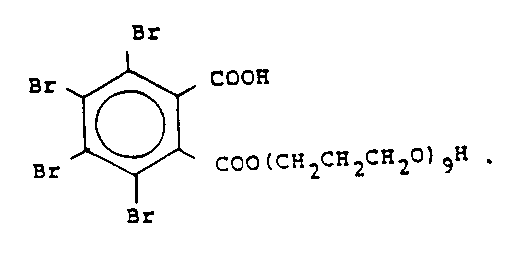

### Example 4

To 240 g (0.24 mol) of the compound of Example 3 was added 45.3 g (0.24 mol) of trimellitic anhydride and the mixture heated at 155°C under nitrogen for about 7 hours. The infrared spectrum indicated the completion of the reaction by the substantial disappearance of the anhydride absorption band at 5.65. The product was isolated in essentially quantitative yield. Analy. Calcd.; % Br, 30.3%; Mol. Wt., 1056; neutralization equivalent, 352; Found: % Br, 29.4; Mol. Wt., 1014; neutralization equivalent, 351. The spectral data was consistent with the structure:

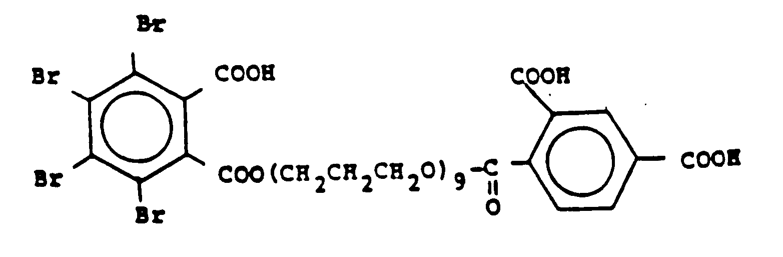

### Example 5 (theoretical)

To 284.0 g (1.0 mol) of tetrachlorophthalic anhydride can be added 350.0 g (1.0 mol) of methoxy "Carbowax" 350 in the presence of 7.0 g of sodium acetate. The mixture is then heated at 90°C for 8 hours in a nitrogen atmosphere, after which it is filtered hot to remove sodium acetate, to give an expected product with the assigned structure:

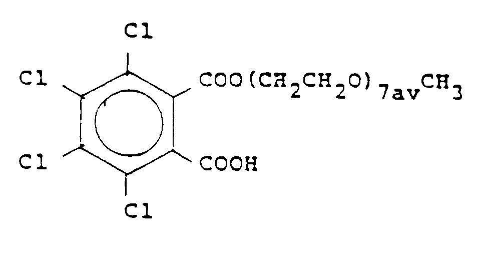

### Example 6 (theoretical)

To 634.0 g (1.0 mol) of the composition of Example 5 can be added 116 g (2.0 mols) of propylene oxide in 200 ml of toluene. The reaction mixture is heated to from 60°-100°C for 3-5 hours, and then concentrated to give a product with the assigned structure:

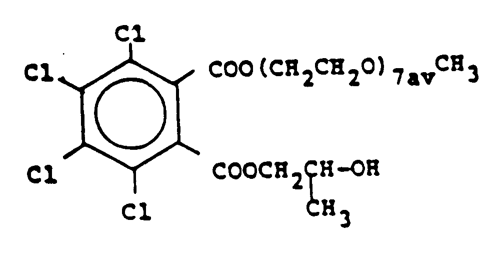

### Example 7 (theoretical)

To 284.0 g (1.0 mol) of tetrachlorophthalic anhydride can be added 200.0 g (1.0 mol) of "Carbowax" 200 in the presence of 7.0 g of sodium acetate. The mixture is then heated at 90°C for 8 hours in a nitrogen atmosphere, and is filtered hot to remove sodium acetate, to generate an expected product with the assigned structure:

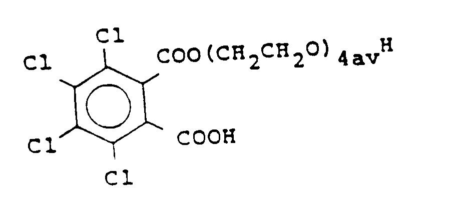

### Example 8

To 484.0 g (1.0 mol) of the product of Example 7 can be added 116.0 g (2.0 mol) of propylene oxide in 200 ml of toluene. The reaction mixture is then warmed at 60°-100°C for 3-5 hours, and concentrated to give a product with the assigned structure:

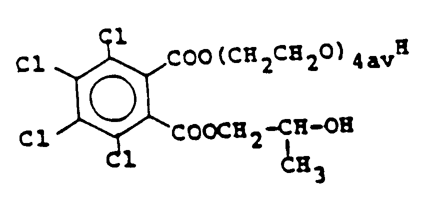

### Example 9

Poly(ethylene glycol) 300, 204.5 g (0.67 mol) was refluxed (T = 117°C) with 600 ml of toluene for 1.5 hours in order to remove a small amount of water present in the glycol. The mixture was cooled to about 100°C; tetrabromophthalic anhydride, 614.5 g (1.35 mols) and sodium acetate, 1.62 g were added; and the mixture was reheated to reflux and held for 25 hours. After the mixture was cooled to 50°C, propylene oxide, (156.4 g, 2.69 mols, 100% excess) was added and the mixture heated to and held at 100°C for 2.5 hours. When the solution cooled to about 50°C it was filtered through a bed of diatomaceus earth and decolorizing charcoal. The filtrate was distilled to remove the solvent to give 904.1 g of product as a viscous liquid. Calcd. % Br, 47.4. Found % Br, 46.5. Analytical data is consistent with the assigned structure:

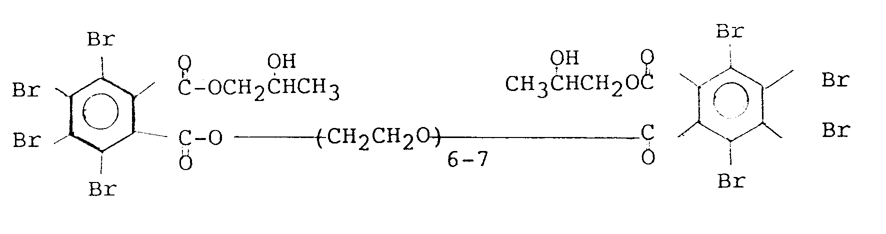

### Example 10

This compound was prepared by the procedure described in Example 9 except that poly(ethylene glycol)200 was used in place of poly(ethylene glycol)300. The product was a viscous liquid. Calcd. % Br, 51.0. Found % Br, 49.3. Analytical data was consistent with the assigned structure:

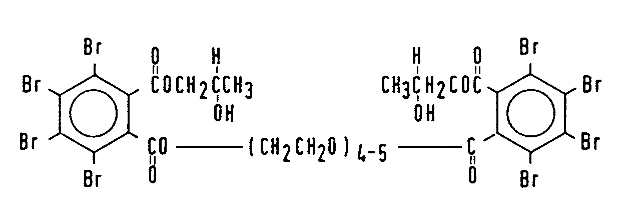

### Example 11

This compound was prepared by the procedure described in Example 9 except that poly(ethylene glycol)600 was used in place of poly(ethylene glycol)300. The product was a viscous liquid. Calcd. % Br, 39.5. Found % Br, 39.3. Analytical data was consistent with the assigned structure.

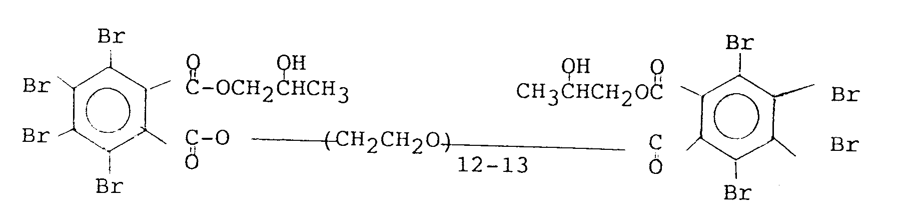

### Example 12

This compound was prepared by the procedure described in Example 9 except that poly(ethylene glycol)400 was used in place of poly(ethylene glycol)300. Product is a viscous liquid. Calcd. % Br, 44.2. Found % Br, 44.0. Analytical data is consistent with the assigned structure:

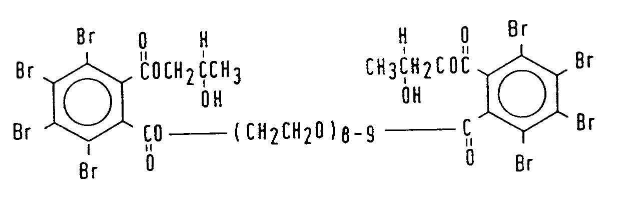

### Example 13

Methanol (54.1 g, 1.5 mol), tetrabromophthalic anhydride (695.6 g, 1.6 mols) , and potassium acetate, 2.73 g were refluxed for 4 hours with 500 ml of toluene. After cooling the reaction mixture to room temperature, propylene oxide (87.12 g, 1.5 moles) added and the mixture reacted at 80°C for 2.5 hours. Product was obtained as a viscous liquid after distilling out the toluene. Calcd. % Br, 57.7. Found % Br, 57.2. Analytical data is consistent with assigned structure.

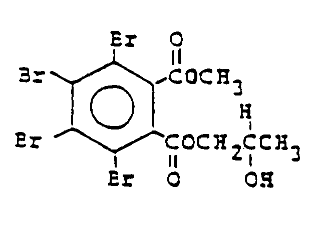

### Example 14

This compound was prepared by the procedure similar to that described in Example 13 except that methoxy "Carbowax" 350 was used in place of methanol and ethylene oxide in place of propylene oxide. Calcd. % Br, 37.8. Found % Br, 37.2. Analytical data was consistent with assigned structure:

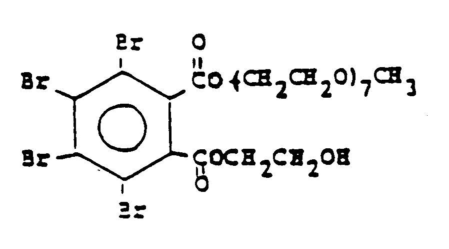

### Example 15

This compound was prepared by the procedure in Example 13 except that 2-methoxyethanol was used in place of methanol. Product was a viscous liquid. Calcd. % Br, 53.6. Found % Br, 52.0. Analytical data was consistent with the assigned structure:

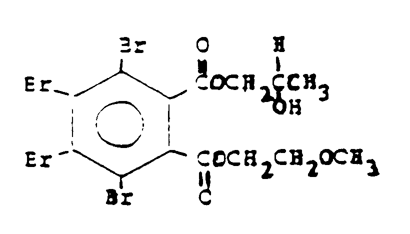

### Example 16

This compound was prepared by the procedure outlined in Example 13 except that methoxy "Carbowax" 350 was used in place of methanol and epoxybutane in place of propylene oxide. Product was a viscous liquid. Calcd. % Br, 36.5. Found % Br, 37.2. Analytical data was consistent with the assigned structure:

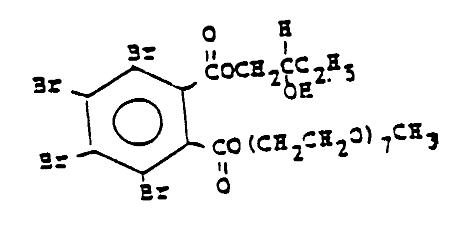

### Example 17

This compound was prepared by the procedure outlined in Example 13 except that 2-ethylhexanol-1 was used in place of methanol. Product was a viscous liquid. Calcd. % Br, 50.0. Found % 52.7. Analytical data was consistent with the assigned structure:

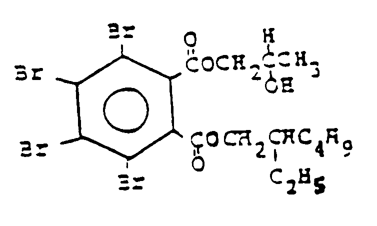

### Example 18

This compound was prepared by the procedure described in Example 13 except that stearyl alcohol was used in place of methanol. Product was a viscous liquid. Calcd. % Br, 41.0. Found % Br, 43.0. Analytical data was consistent with the assigned structure:

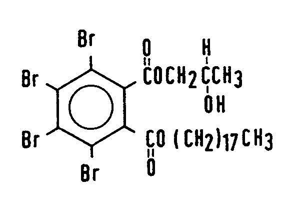

### Example 19

This compound was prepared by the procedure described in Example 13 except that 2,3-dibromo-propanol-1 was used in place of methanol. Product was a viscous liquid. Calcd. % Br, 64.8. Found % Br, 61.9. Analytical data was consistent with the assigned structure:

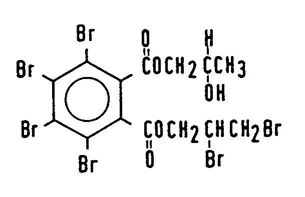

### Example 20

This compound was prepared by the procedure outlined in Example 16 except that epichlorohydrin was used in place of epoxybutane. Calcd. % Br, 35.7. Found % 35.4. Analytical data was consistent with the assigned structure:

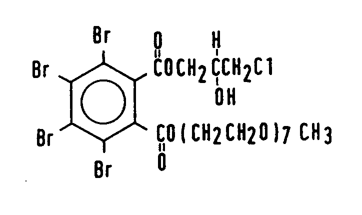

### Example 21

To a solution of methoxy "Carbowax" 350 (300.0 g, 0.89 mol) in dry toluene (184 ml) was added sodium methoxide (48.0 g, 0.90 mol) in methanol. The methanol was then distilled off at ambient pressure. Tetrabromophthalic anhydride was then added (442.2 g, 0.89 mol) along with an additional 50 ml of toluene. The reaction mixture was refluxed for 2 hours and after cooling to room temperature, epichlorohydrin (106.94 g, 1.16 mols) was added. The mixture was refluxed for 20 hours. After the solvent and excess epichlorohydrin were distilled, a viscous dark product was obtained. Calcd. % Br, 37.2. Found % Br, 40.4. Analytical data was consistent with assigned structure:

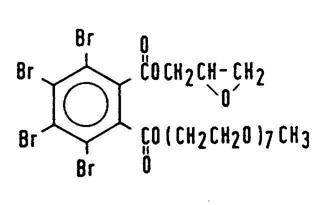

### Example 22

Methoxy "Carbowax" 350 and toluene were refluxed for 1 hour in order to distill out a small amount of water. Tetrabromophthalic anhydride (1:1 mole ratio with Methoxy "Carbowax" 350) and sodium acetate were added and the mixture refluxed for 17 hours. After cooling to room temperature, an excess of diazomethane (prepared from the decomposition of N-methyl-N-nitroso-p-toluene sulfonamide by sodium hydroxide) in ethyl ether was added and the mixture allowed to stand overnight. The excess diazomethane was decomposed by adding acetic acid and the solvent removed by distillation. Product was a viscous liquid. Calcd. % Br, 39.2. Found % Br, 37.4. Analytical data was consistent with the assigned structure:

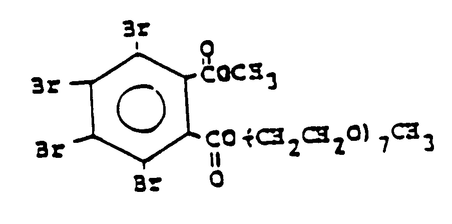

### Example 23

Poly(ethylene glycol)600, 885.4 g ( 1.40 mols), tetrabromophthalic anhydride, 1298.4 g (2.80 mols), potassium acetate, 1.35 g, and toluene (1000 g) were charged into a one-gallon glass-lined reactor and heated to 120°C. After 4 hours at this temperature, ethylene oxide, 246.68 g (5.60 mols) was pumped into the reactor in 3/4 hour while maintaining the temperature at 120°C. After one more hour of heating, the mixture was cooled to room temperature, the excess ethylene oxide was then vented, and the product collected. After stripping off the toluene, 2250 g of the product was isolated in 99% yield as a viscous liquid. Calcd. % Br, 39.2. Found % Br, 38.8. Analytical data was consistent with the assigned structure.

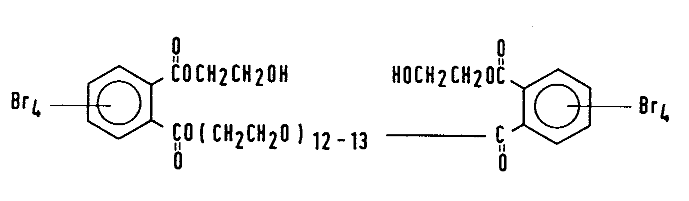

### Example 24

To the product of Example 11, 453.8 g (0.27 mol), acetic anhydride, 83.4 g (0.82 mol), potassium acetate, 1.0 g, and toluene, 400 ml, were added and the mixture refluxed for 8 hours. After cooling to room temperature, the reaction mixture was transferred to a separatory funnel and extracted first with 100 ml of a 16% potassium bicarbonate solution and then with 100 ml of water. After distilling off the solvent, 335.0 g (64% yield) of product was obtained as a viscous liquid. Calcd. % Br, 39.2. Found % Br, 38.8. Analytical data was consistent with the assigned structure:

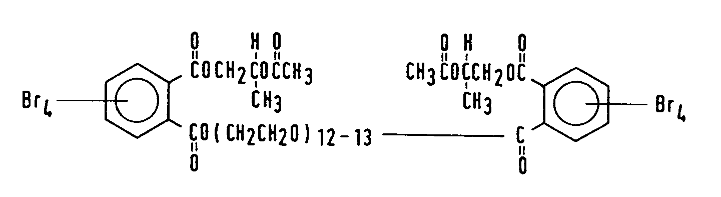

### Example 25

Tetrabromophthalic anhydride, 231.9 g (0.50 mol), 2-ethylhexanol, 130.2 g (1.0 mol), and potassium acetate, 0.24 g were heated to and kept at 120°C for 4 hours. The mixture was cooled to 60°C and potassium carbonate, 35.9 g (0.26 mol), was added. The mixture was reheated to 80°C and kept at this temperature for 2 hours, then cooled to 60°C and triethylamine, 14.2 g (0.14 mol) was added. Then the mixture was reheated to 70°C and methyl iodide, 113.6 g (0.8 mol) was added over 20 minutes. The mixture was heated to 70-75°C and kept at this temperature for 2½ hours, then cooled to room temperature and filtered in order to remove by-product potassium iodide. The filtrate was distilled to remove toluene and 290 g of crude product was collected as a pale yellow liquid. This product was extracted 3 times with 100 ml each of a 6.5% potassium carbonate solution followed by 2 times with 100 ml each of water and once with a 30% sodium chloride solution. The organic phase was dried over anhydrous magnesium sulfate overnight. The magnesium sulfate was filtered off and after removing the solvent from filtrate by distillation, 204 g of product was obtained in 67% yield as a pale yellow liquid. Calcd. % Br, 52.6. Found % Br, 52.2. Analytical data was consistent with the assigned structure:

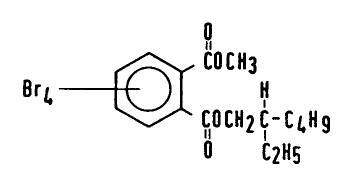

### Example 26

Tetrabromophthalic anhydride, 231.9 gm (0.5 mol), 2-(2-methoxyethoxy)-ethanol, 360.5 gm (3.0 mols), stannous oxalate, 2.32 gm, 0.2 gm KOAc and xylene, 100 ml were mixed and refluxed (temp. 171°C) for 73 hours, during which time of reaction water was collected. Then 150 ml of toluene were added to the reaction mixture, which was then washed with a 15% NaCl solution. The organic phase was dried with anhydrous magnesium sulfate overnight. After removing the magnesium sulfate by filtration, toluene and xylene were removed by distillation to give 246.6 gm of yellow liquid product in 72% yield. Calcd. % Br, 46.6. Found % Br, 46.9. Analytical data was consistent with the assigned structure:

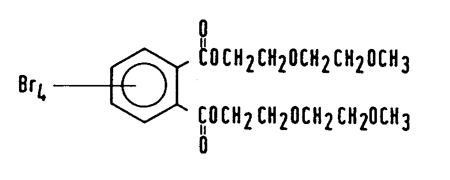

### Example 27 (theoretical)

This compound may be prepared by the procedure outlined in Example 26 except using 2-(2-ethoxyethoxy)-ethanol in place of 2-(2-methoxyethoxy)-ethanol.

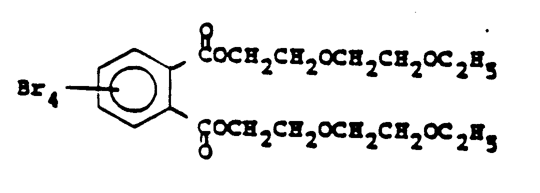

### Example 28

This compound was prepared by the procedure outlined in Example 23 except that docosyl alcohol (behenyl alcohol) was used in place of poly(ethylene glycol) 600 and propylene oxide in place of ethylene oxide. The product was a viscous liquid. Calcd. % Br, 37.7. Found % Br, 36.5. Analytical data was consistent with the assigned structure:

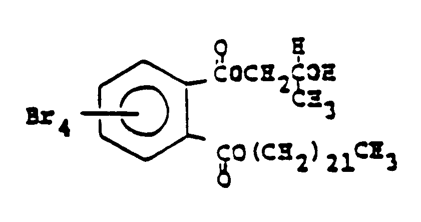

### Example 29 (theoretical)

This compound may be prepared by the procedure outlined in Example 23 except that tricontyl alcohol can be used in place of poly(ethylene glycol) 600 and propylene oxide in place of ethylene oxide. The product would be a viscous liquid.

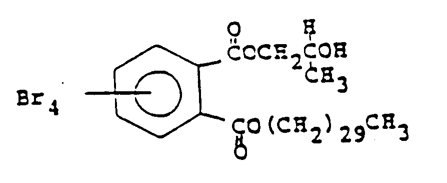

### Example 30 (theoretical)

This compound may be prepared by the procedure outlined in Example 26 except using methoxy "Carbowax" 550 in place of 2-[2-methoxyethoxy]-ethanol.

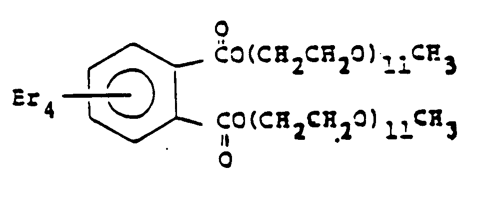

### Example 31

Into a one liter three-necked flask, equipped with an overhead mechanical stirrer, a Dean Stark trap, a water condenser with a nitrogen inlet and a thermometer were charged 231.86 gm (0.50 mol) of tetrabromophthalic anhydride, 390.7 gm (3.0 mols) of 2-ethyl-1-hexanol, and 2.32 gm of stannous oxalate. The flask and contents were stirred and heated to reflux (195°C) and 9 ml of water (100% of theory) were obtained in 22 hours. The contents were cooled to room temperature, filtered to remove the catalyst, and the excess of alcohol was removed by vacuum distillation to give 350 gm of a light yellow oil. The yield was 97%. Calcd. % Br 45.3, Found % Br, 44.9. Analytical data was consistent with the assigned structure. High pressure liquid chromatography (HPLC) of the product showed it to be 96.2% pure with only a minor amount of by-product (3.3%) due to decarboxylation of the intermediate half-ester. This contrasts with the results obtained by Spatz, et al., [I & EC Products Res. and Dev., 8: 391 (1969), at p. 2, last paragraph].

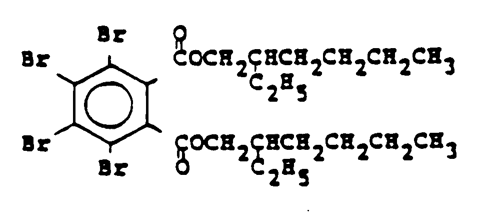

### Example 32

Following the procedure outlined in Example 31 using 6955.8 gm (15.0 mols) of tetrabromophthalic anhydride, 11.72 kg (90.15 mols) 2-ethyl-1-hexanol, and 69.55 gm of stannous oxalate, resulted in 10.5 kg (99% yield) of di-2-ethylhexyl tetrabromophthalate. Calcd. % Br 45.3, Found % Br 43.5. Analytical data was consistent with the assigned structure. High pressure liquid chromatography (HPLC) of the product showed it to be 97.1% pure with only a minor amount of by-product (2.8%) due to decarboxylation of the intermediate half-ester.

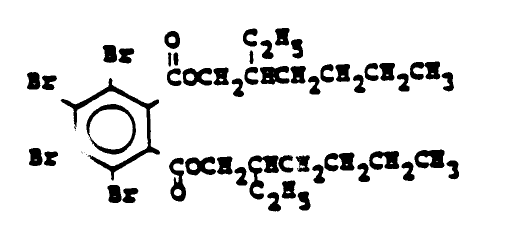

### Example 33 (theoretical)

This compound may be prepared following the procedure outlined in Example 31 except using 1-dodecanol instead of 2-ethyl-1-hexanol.

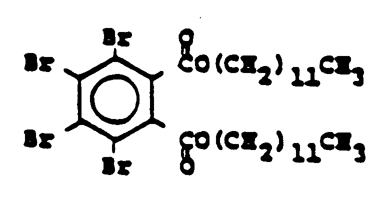

### Example 34

Into a two liter three-necked flask, equipped with an overhead mechanical stirrer, Dean Stark trap, a water condenser with a nitrogen inlet tube and a thermometer, were charged 463.7 gm (1.0 mol) of tetrabromophthalic anhydride, 442.7 gm (3.4 mols) of 1-octanol and 4.6 gm of stannous oxalate. The flask and contents were heated to reflux (210°C) and 22.5 gm of a water phase were collected in 7 hours. The excess 1-octanol was removed on a rotary evaporator to give 696 gm of a dark oil. The yield was 98.6%.

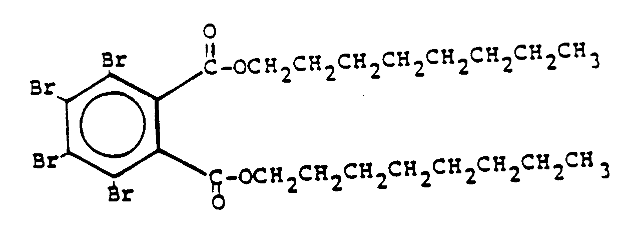

### Example 35 (theoretical)

This compound may be prepared following the procedure in Example 31 except using isononyl alcohol instead of 2-ethyl-1-hexanol.

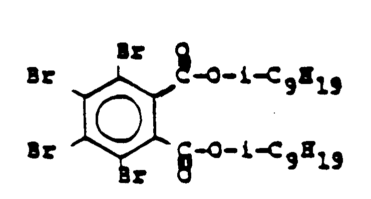

### Example 36 (theoretical)

This compound may be prepared by the procedure outlined in Example 26 except using isodecyl alcohol in place of 2-(2-methoxyethoxy)-ethanol.

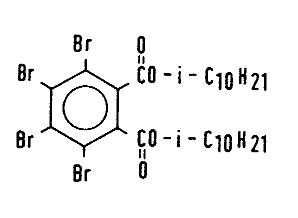

### Example 37 (theoretical)

This compound may be prepared following the procedure outlined in Example 31 except using n-butyl alcohol instead of 2-ethyl-1-hexanol and using butyl stannoic acid as catalyst instead of stannous oxalate.

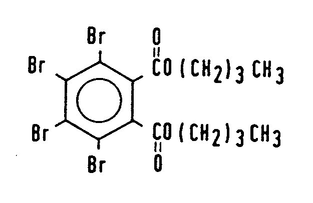

### Example 36 (theoretical)

This compound may be prepared following the procedure outlined in Example 31 except using 1-octadecanol instead of 2-ethyl-1-hexanol.

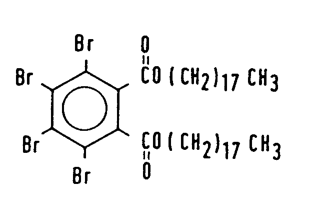

### Example 39

Into a one liter three-necked flask, equipped with an overhead mechanical stirrer, Dean Stark trap, a water condenser with a nitrogen inlet tube and a thermometer, were charged 285.9 gm (1.0 mol) of tetrachlorophthalic anhydride, 442.7 gm (3.4 mol) of 2-ethyl-1-hexanol and 6.5 gm of titanium tetrakisisopropoxide. The flask and contents were heated to reflux (200°C) and 23 gm of a water phase were collected in 2 hours. The excess 2-ethyl-2-hexanol was removed on a rotary evaporator to give 528 gm of an oil. The yield was quantitative.

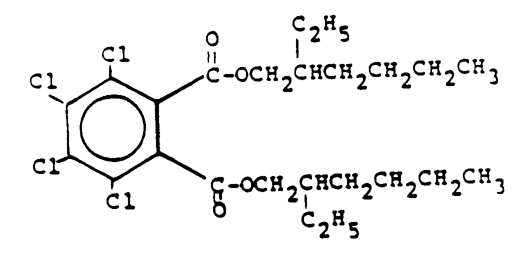

### Example 40 (theoretical)

This compound may be prepared following the procedure outlined in Example 31 except using cyclohexanol instead of 2-ethyl-1-hexanol.

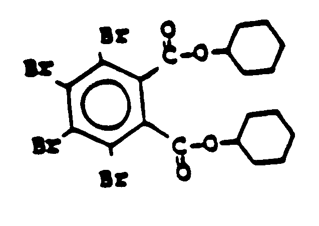

### Example 41 (theoretical)

This compound may be prepared following the procedure outlined in Example 31 except using tribromophthalic anhydride instead of tetrabromophthalic anhydride.

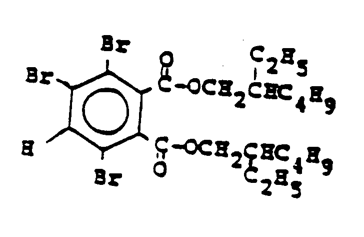

### Example 42 (theoretical)

This compound may be prepared following the procedure outlined in Example 31 except using 1,12-dodecanediol instead of 2-ethyl-1-hexanol and dibutyltin dilaurate instead of stannous oxalate.

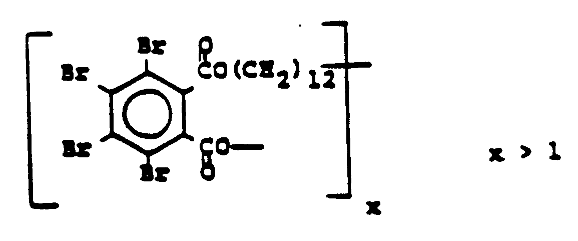

### Example 43

Into a two liter three-necked flask, equipped with an overhead mechanical stirrer, Dean Stark trap, a water condenser with a nitrogen inlet tube and a thermometer, were charged 927.5 gm (2 mols) of tetrabromophthalic anhydride, 780 gm (6 mols) of 2-ethyl-1-hexanol and 9.27 gm of titanium tetrabutoxide. The flask and contents were heated to reflux 185°C at 560mm pressure and 73 gm of a water phase were collected in 10 hours. The excess 2-ethyl-1-hexanol was removed on a rotary evaporator to give 1350 gm of oil. The yield is 96%. Analytical data was consistent with the assigned structure.

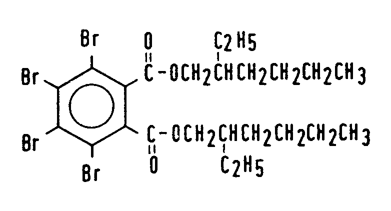

### Example 44 (theoretical)

This compound may be prepared following the procedure outlined in Example 31 except using 2,4,5,6,-tetrabromoisophthalic acid instead of tetrabromophthalic anhydride.

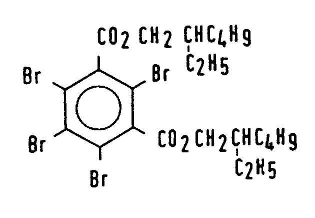

### Example 45 (theoretical)

This compound may be prepared following the procedure outlined in Example 31 except replacing three-fourths of the 2-ethyl-1-hexanol by an equimolar quantity of 1-butanol and refluxing the 2-ethyl-1-hexanol for 2-3 hours prior to the addition of the remaining alcohol.

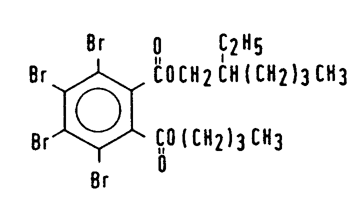

### Example 46 (theoretical)

This compound may be prepared following the procedure outlined in Example 45 except using 1-hexanol instead of 2-ethyl-1-hexanol and 2-ethoxyethoxyethanol instead of 1-butanol.

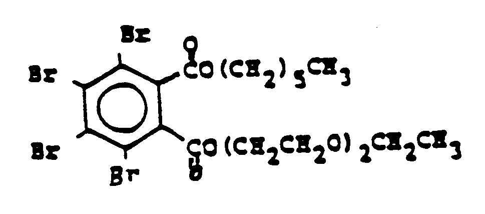

### Example 47 (theoretical)

This compound may be prepared following the procedure outlined in Example 45 except using cyclohexanol instead of 1-butanol.

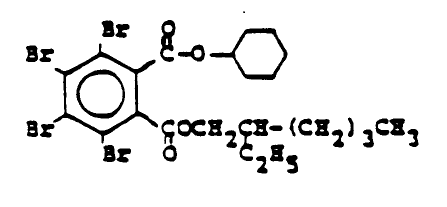

### Example 48 (theoretical)

This compound may be prepared following the procedure outlined in Example 44 except using 1-decanol instead of 2-ethyl-1-hexanol, tetrachlorophthalic anhydride in place of tetrabromophthalic anhydride, and butylstannoic acid as the catalyst instead of stannous oxalate.

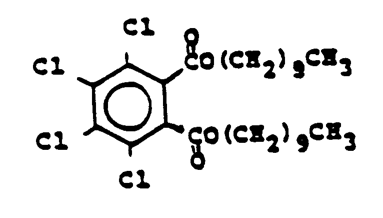

### Example 49

Into a one liter three-necked flask, equipped with an overhead mechanical stirrer, Dean Stark trap, a water condenser with a nitrogen inlet tube and a thermometer, were charged 285.9 gm (1.0 mol) of tetrachlorophthalic anhydride, 442.7 gm (3.4 mols) of 1-octanol and 3.0 gm of butylstannoic anhydride. The flask and contents were heated to reflux (216°C) and 18.8 gm of a water phase were collected in 2 hours. The excess 1-octanol was removed on a rotary evaporator to give 522 gm of an oil. The yield was 99%.

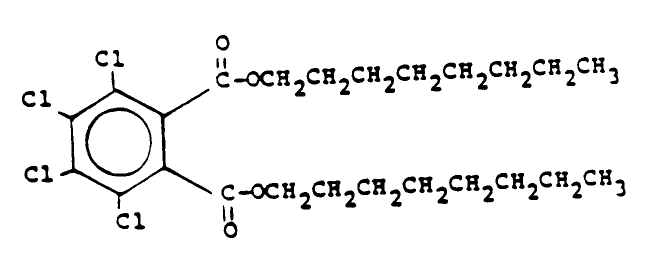

### Example 50

Into a one liter three-necked flask, equipped with an overhead mechanical stirrer, Dean Stark trap, a water condenser with a nitrogen inlet tube and a thermometer, were charged 285.9 gm (1.0 mol) of tetrachlorophthalic anhydride, 442.7 gm (3.4 mols) of 2-ethyl-1-hexanol and 3.3 gm of stannous oxalate. The flask and contents were heated to reflux (200°C) and 19.8 gm of a water phase were collected in 3 hours. The excess 2-ethyl-1-hexanol was removed on a rotary evaporator to give 508 gm of a light colored oil. The yield was 96.2%.

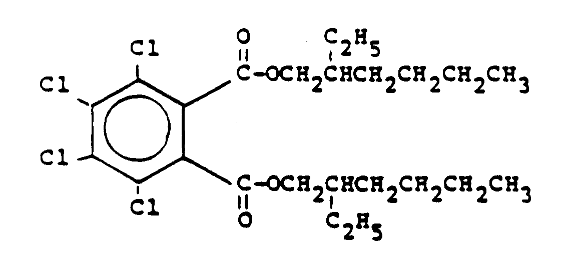

### Example 51

Into a one liter three-necked flask, equipped with an overhead mechanical stirrer, Dean Stark trap, a water condenser with a nitrogen inlet tube and a thermometer, were charged 285.9 gm (1.0 mol) of tetrachlorophthalic anhydride, 442.7 gm (3.4 mols) of 2-ethyl-1-hexanol and 3.3 gm butylstannoic anhydride. The flask and contents were heated to reflux (200°C) and 20 gm of a water phase were collected in 2 hours. The excess 2-ethyl-1-hexanol was removed on a rotary evaporator to give 527 gm of a light colored oil. The yield was quantitative.

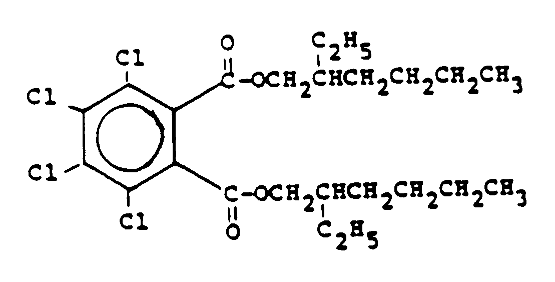

### Example 52

Into a two liter three-necked flask, equipped with an overhead mechanical stirrer, Dean Stark trap, a water condenser with a nitrogen inlet tube and a thermometer, were charged 572 gm (2.0 mols) of tetrachlorophthalic anhydride, 885 gm (6.8 mols) of 2-ethyl-1-hexanol and 6.6 gm of stannous oxalate. The flask and contents were heated to reflux (196°C) and 40.0 gm of a water phase were collected in 6 hours. The excess 2-ethyl-1-hexanol was removed on a rotary evaporator to give 952 gm of a light colored oil. The yield was 90%.

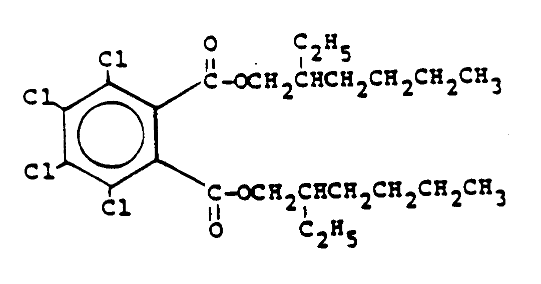

### Example 53

Into a two liter three-necked flask, equipped with an overhead mechanical stirrer, Dean Stark trap, a water con denser with a nitrogen inlet tube and a thermometer, were charged 285.9 gm (1.0 mol) of tetrachlorophthalic anhydride, 347.5 gm of tetrahydronaphthalene and 3.3 gm of stannous oxalate. The flask and contents were heated to reflux (178°C) and 19.0 gm of water phase were collected in 10 hours. The excess 2-ethyl-1-butanol and tetrahydronaphthalene were removed on a rotary evaporator to give 474 gm of an oil. The yield was quantitative.

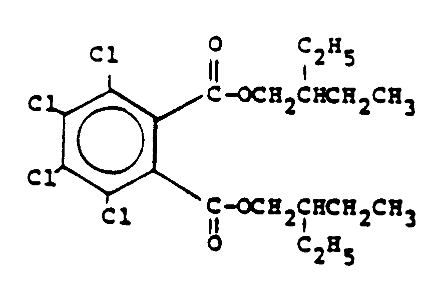

### Example 54

Into a two liter three-necked flask, equipped with an overhead mechanical stirrer, Dean Stark trap, a water condenser with a nitrogen inlet tube and a thermometer, were charged 463.7 gm (1.0 mol) of tetrabromophthalic anhydride, 408 gm (4.0 mol) of 2-ethyl-1-butanol, 450 gm of tetrahydronaphthalene and 4.64 gm of butyl stannoic anhydride. The flask and contents were heated to reflux (170°C) and 20 gm of a water phase were collected in 9 hours. The excess 2-ethyl-1-butanol and tetrahydronaphthalene were removed on a rotary evaporator to give 624 gm of a light yellow oil. The yield was 96%.

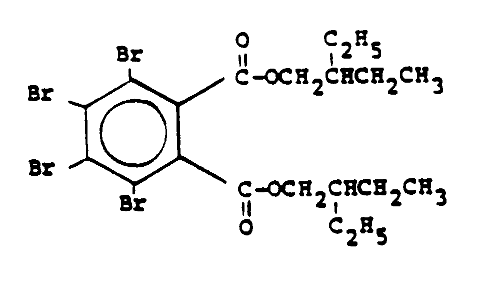

### Example 55

Into a two liter three-necked flask, equipped with an overhead mechanical stirrer, Dean Stark trap, a water condenser with a nitrogen inlet tube and a thermometer, were charged 285.9 gm (1.0 mol) of tetrachlorophthalic anhydride, 347.5 gm (3.4 mol) of 1-hexanol; 300 gm of tetrahydronaphthalene and 3.0 of butylstannoic anhydride. The flask and contents were heated to reflux (180°C) and 18.0 gm of a water phase were collected in 4 hours. The excess 1-hexanol and tetrahydronaphthalene were removed on a rotary evaporator to give 466 gm of an oil. The yield was 99%.

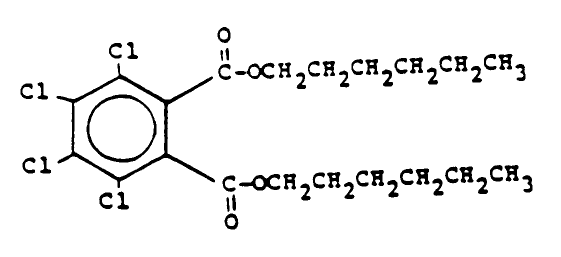

### Example 56

Into a two liter three-necked flask, equipped with an overhead mechanical stirrer, Dean Stark trap, a water condenser nitrogen inlet tube and a thermometer, were charged 463.7 gm (1.0 mol) of tetrabromophthalic anhydride, 347.5 gm (3.4 mol) of 1-hexanol, 300 gm of tetrahydronaphthalene and 6.6 gm of butyl stannoic anhydride. The flask and contents were heated to reflux (180°C) and 21.6 gm of a water phase were collected in 6.5 hours. The excess 1-hexanol and tetrahydronaphthalene were removed on a rotary evaporator to give 623 gm of an oil. The yield was 96%.

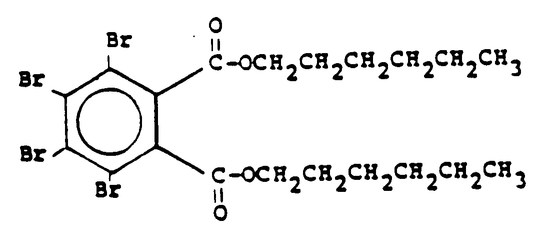

### Example 57 (theoretical)

This compound may be prepared following the procedure outlined in Example 31 except using 2,3,5,6,-tetrabromoterephthalic acid instead of tetrabromophthalic anhydride.

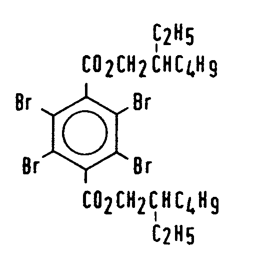

### Example 58

A mixture of 75.3 g of omega-methylhepta (oxyethylene)-2-hydroxypropyl tetrabromophthalate containing 2.2% hydroxyl, 45.16 g (0.10 mol) tetrabromophthalic anhydride, and 50 mg potassium acetate, was heated at 125°C for 5.5 hours. After cooling to room temperature, 11.27 g (0.18 mol) of propylene oxide was added, and the mixture was reheated to 85°C and kept at this temperature for 3 hours. The excess propylene oxide was removed by distillation to give a colorless, opalescent, viscous liquid in essentially quantitative yield. Calcd. % Br, 46.1. Found % Br, 46.7. Analytical data was consistent with the following assigned structure:

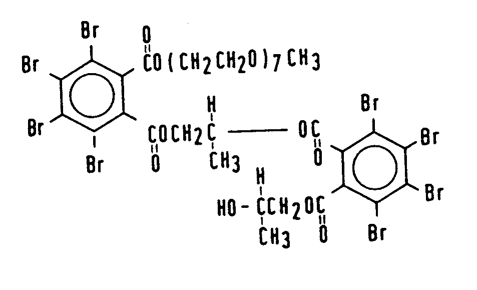

### Example 59

A mixture of 129.25 g (0.25 mol) Methoxy "Carbowax" 550 (M.W. 550), 231.86 g (0.50 mol) tetrabromophthalic anhydride, 0.24 g potassium acetate and 250 ml toluene were refluxed for 6 hours. After cooling to 50-60°C, 70.58 g (1.2 mols) of propylene oxide was added in 15 minutes. The mixture was heated to 85°C and kept at this temperature for 6 hours. After filtration, the solvent and excess of propylene oxide were removed by distillation to give the product as an opalescent, viscous liquid in essentially quantitative yield. Calcd. % Br, 41.0. Found % Br, 40.9. Analytical data was consistent with the following assigned structure:

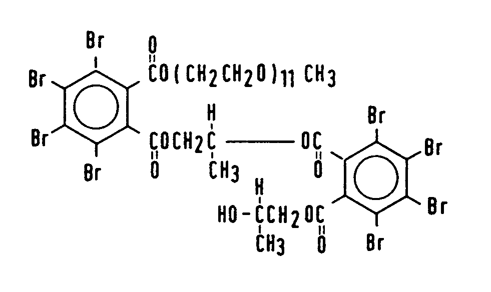

### Example 60

The compound below was prepared by the procedure outlined in Example 59 except that Methoxy "Carbowax" 750 (M.W. 750) was used in place of Methoxy "Carbowax" 550. The product was a slightly yellow, viscous liquid. Calcd. % Br, 36.7. Found % Br, 36.5. Analytical data was consistent with the following assigned structure:

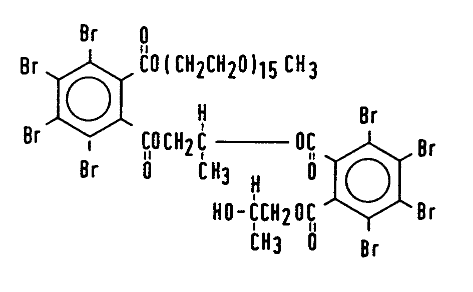

### Example 61

The compound below was prepared by the procedure outlined in Example 59 except that epichlorohydrin was used in place of propylene oxide. The product was a slightly yellow, opalescent, viscous liquid. Calcd. % Br, 39.2; % Cl, 4.35. Found % Br, 39.1; % Cl, 4.40. Analytical data was consistent with the following assigned structure:

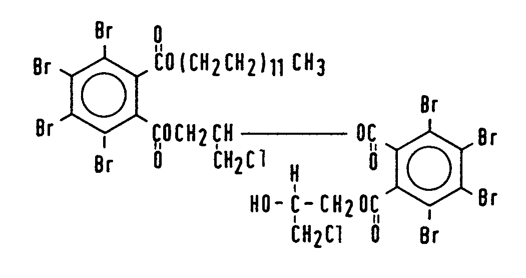

### Example 62

Into a 1-gallon, stainless steel, stirred autoclave, were charged: 855.4 g (1.40 mols) of poly(ethylene glycol 600); 1623.0 g (3.51 mols) of tetrabromophthalic anhydride; 1.7 g (3.5 mols) of potassium acetate, and 1000 ml of toluene. The mixture was heated to and kept at 120°C for 6 hours. 328.3 g (7 mols) of ethylene oxide was pumped into the mixture in 45 minutes. Heating continued for 2 hours. After cooling to room temperature, the reaction mixture was collected, and the solvent was removed by distillation to give the product in essentially quantitative yield. The product was a light yellow, viscous liquid. Calcd. % Br, 42.5. Found % Br, 43.0. Analytical data was consistent with the following assigned structure:

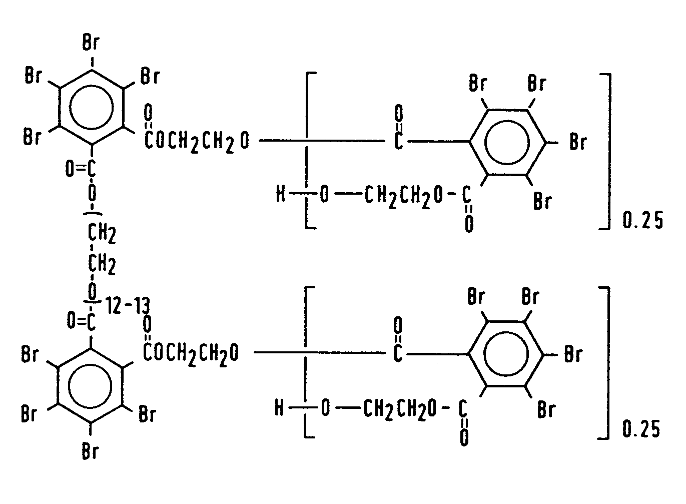

### Example 63

The compound below was prepared by the procedure outlined in Example 62 except that 3 mols of tetrabromophthalic anhydride and 6 mols of ethylene oxide were used per mol of poly(ethylene glycol)600. The product was a light yellow, viscous liquid. Calcd. % Br, 44.9. Found % Br, 44.6. Analytical data was consistent with the following assigned structure:

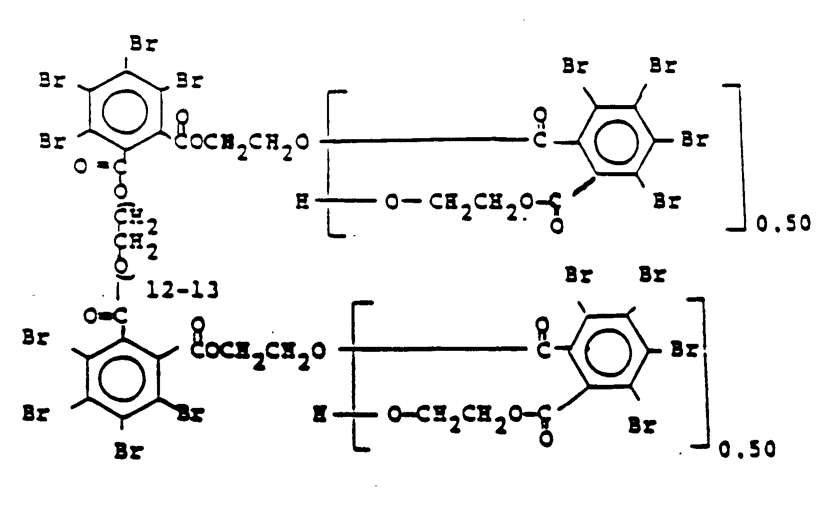

### Example 64

The compound below was prepared by the procedure outlined in Example 62 except that 4 mols of tetrabromophthalic anhydride and 8 mols of ethylene oxide were used per mol of poly(ethylene glycol)600. The product was a yellow, highly viscous liquid. Calcd. % Br, 48.4. Found % Br, 49.9. Analytical data was consistent with the following assigned structure:

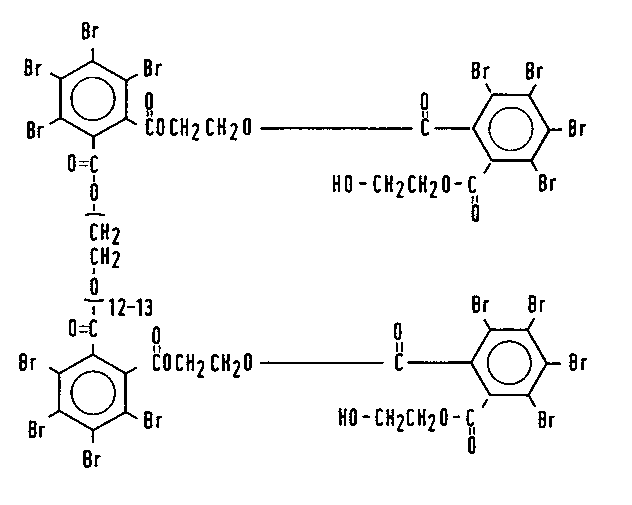

### Example 65

The compound below was prepared by the procedure outlined in Example 64 except that propylene oxide was used in place of ethylene oxide. The product was a yellow, highly viscous liquid. Calcd. % Br, 47.4. Found % Br, 46.3. Analytical data was consistent with the following assigned structure:

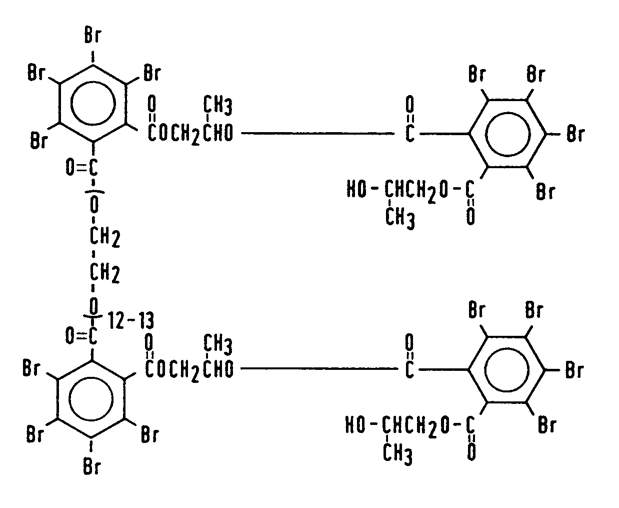

### Example 66

The compound below was prepared by the procedure outlined in Example 64 except that octadecyl alcohol was used in place of poly(ethylene glycol)600. The product was a yellow, highly viscous liquid. Calcd. % Br, 48.6. Found % Br, 46.5. Analytical data was consistent with the following assigned structure:

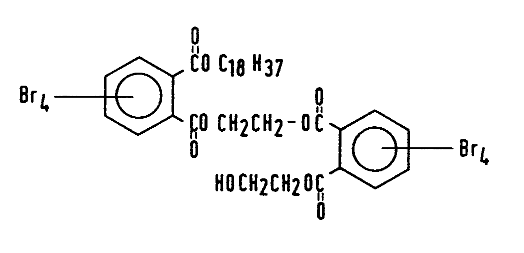

### Example 67

A mixture of 251.7 g (containing 1.52% hydroxy groups) of the product of Example 64 and 250 ml of toluene was warmed to 50°C until the reactant dissolved. After cooling to room temperature, 18.55 g (0.2 mol) of acetyl chloride was added in one portion, and then 25.1 g (0.25 mol) of triethylamine was added in 10 minutes. During this period the temperature of the reaction mixture rose from 23°C to 62°C. The mixture was heated to reflux and kept there for four hours. After filtering the reaction mixture, the solvent was removed to give a dark red-yellow, viscous liquid in 92% yield. Calcd. % Br, 46.9. Found % Br, 47.1. Analytical data was consistent with the following assigned structure:

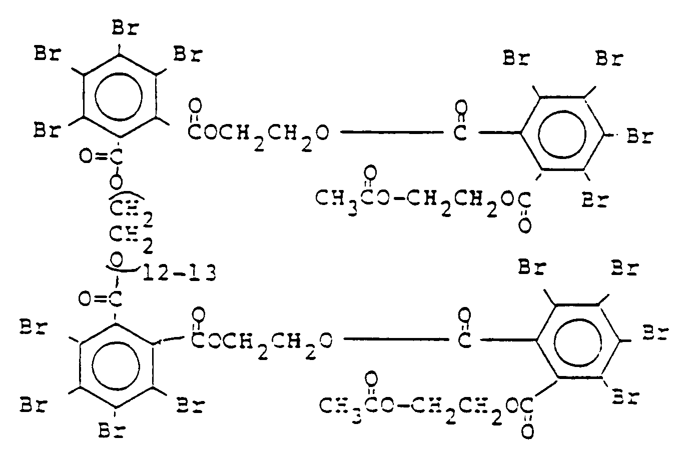

### Example 68

The compound below was prepared by the procedure outlined in Example 65 except that behenyl alcohol was used in place of poly(ethylene glycol)600. The product was a highly viscous liquid. Calcd. % Br, 46.6. Found % Br, 45.9. Analytical data was consistent with the following assigned structure:

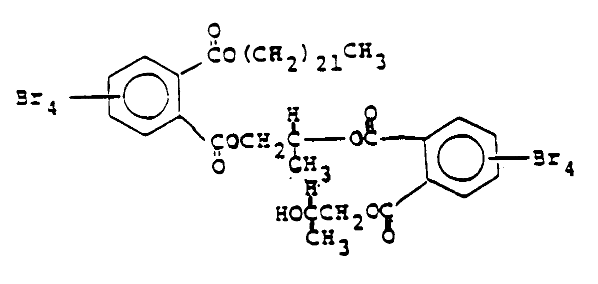

### Demonstration of Fire Resistance

### Examples 69 to 72

In the following examples, the fire resistant characteristics of the hydraulic fluid compositions of this invention are demonstrated. Those compositions of Examples 71 and 72 which contain more than one component were prepared by simply stirring the ingredients together. All percentages are by weight.
- DOTBP =: Dioctyl Tetrabromophthalate (an inventive ester)
- TCP =: Tricresyl Phosphate ["Durad" 124, a trademark of FMC Corp.]
- TBPP =: tert-Butyl Phenyl Phosphate ["Durad" 220B, a trademark of FMC Corp.]

**Table I**

| Ingredient | Example | | | |
|---|---|---|---|---|
| | 69 (comparison) | 70 | 71 | 72 |
| DOTBP | - | 100.0 | 65.0 | 50.0 |
| TCP | - | - | 35.0 | - |
| TBPP | 100.0 | - | - | 50.0 |

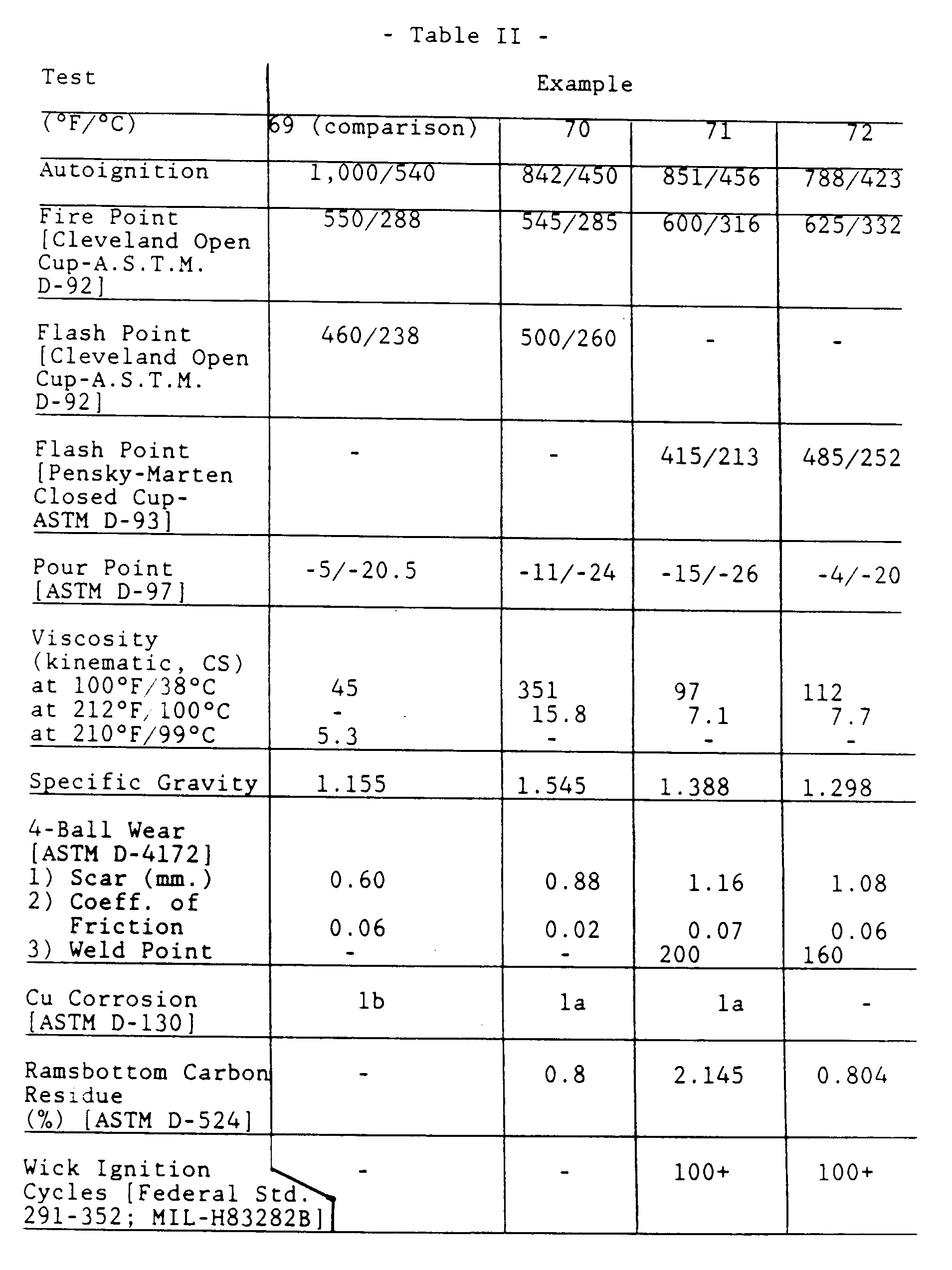

The above results clearly demonstrate the fire resistant characteristic of the compositions of this invention as evidenced by the high autoignition temperatures, fire points, and flash points of compositions 70, 71, and 72. Further, the flash and fire points of these compositions are at least comparable to the known commercial fire resistant hydraulic fluid (Example 69) and in several instances higher. Additionally, the flame resistant nature of the compositions of this invention (example 71 and 72) is shown by the wick ignition test in which a wick is saturated with a liquid and then passed through a flame in windshield wiper fashion for a number of cycles. As shown by the data, the wicks saturated with the compositions 71 and 72 did not ignite even after 100 cycles through a flame, the limit of the test. Compositions 70, 71, and 72 of this invention also show comparable lubricating properties to the commercial hydraulic fluid (example 69) as shown by an at least comparable and in one case lower coefficient of friction.

## Claims

1. A fire retardant hydraulic fluid composition comprising at least one fire resistant polyhaloaromatic ester and from 0% to 99% by weight of a hydraulic fluid selected from:
(A) mineral oils;
(B) poly-α-olefins;
(C) cycloaliphatics;
(D) alkylated aromatics;
(E) esters of dibasic acids;
(F) silicate esters;
(G) polyol esters;
(H) polyglycol esters;
(I) phosphate esters; and
(J) organohalides other than polyhaloaromatic esters.

2. The use of a composition comprising at least one fire resistant polyhaloaromatic ester and from 0% to 99% by weight of a hydraulic fluid selected from:
(A) mineral oils;
(B) poly-α-olefins;
(C) cycloaliphatics;
(D) alkylated aromatics;
(E) esters of dibasic acids;
(F) silicones;
(G) silicate esters;
(H) polyester fluids;
(I) polyglycol fluids;
(J) phosphate esters; or
(K) organohalides other than polyhaloaromatic esters
as a fire retardant hydraulic fluid.

3. The composition of claim 1, wherein the polyhaloaromatic ester is a polyhalophthalate ester.

4. The composition of claim 3, wherein the polyhaloaromatic ester is a compound of the formula: 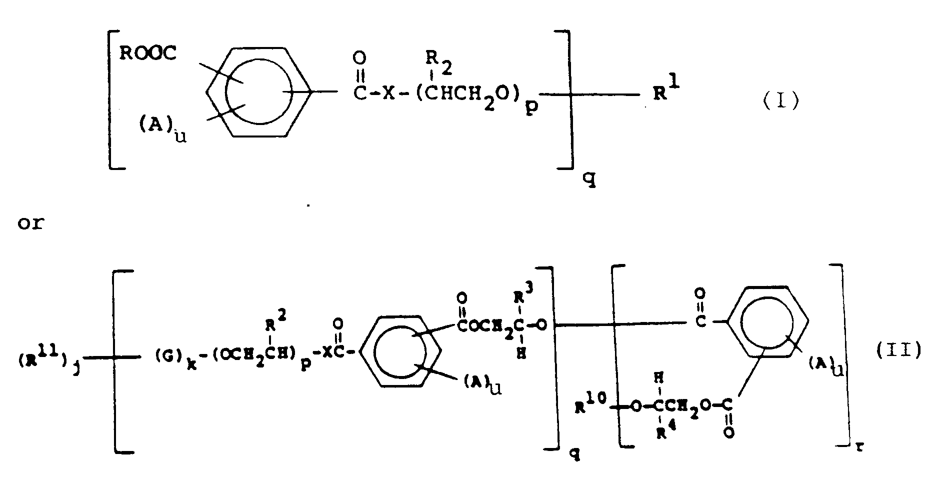 wherein
(a) the rings can have all possible isomeric arrangements;
(b) R is unsubstituted C₁₋₃₀ alkyl, hydroxy C₂₋₂₀ alkyl, polyhydroxy C₃₋₁₀ alkyl, or 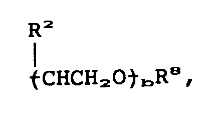 where R⁸ is unsubstituted C₁₋₁₈ alkyl, R² is as defined below, and b is 1 to 50;
(c) R¹ is H, branched, or linear unsubstituted saturated C₁₋₃₀ alkyl or unsaturated C₂₋₂₂ alkyl, or 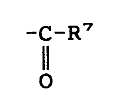 and R⁷ is as defined below,
(d) R², independently, is H or CH₃;
(e) R³ and R⁴ are, independently, H, C₁₋₁₈ alkyl, halogen substituted C₁₋₁₈ alkyl, -OH, -OR⁵, or 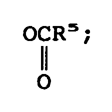
(f) R⁵ is C₁₋₂₂ alkyl;
(g) R⁶ is H or C₁₋₂₂ alkyl;
(h) R⁷ is C₁₋₁₈ alkyl, polyhydroxy C₃₋₁₂ alkyl, 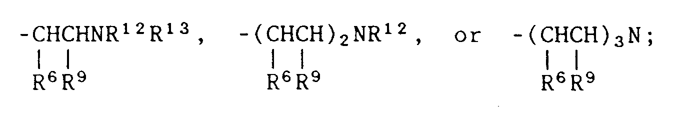
(i) R⁸ is branched or linear unsubstituted C₁₋₁₈ alkyl;
(j) R⁹ is H or C₁₋₂₂ alkyl;
(k) R¹⁰ is H, 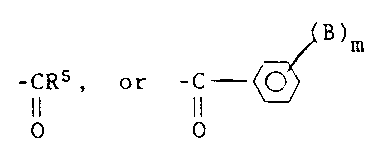 where B and m are as defined below;
(l) R¹¹ is H, branched or linear unsubstituted C₁₋₃₀ alkyl, polyhydroxy C₃₋₁₂ alkyl, 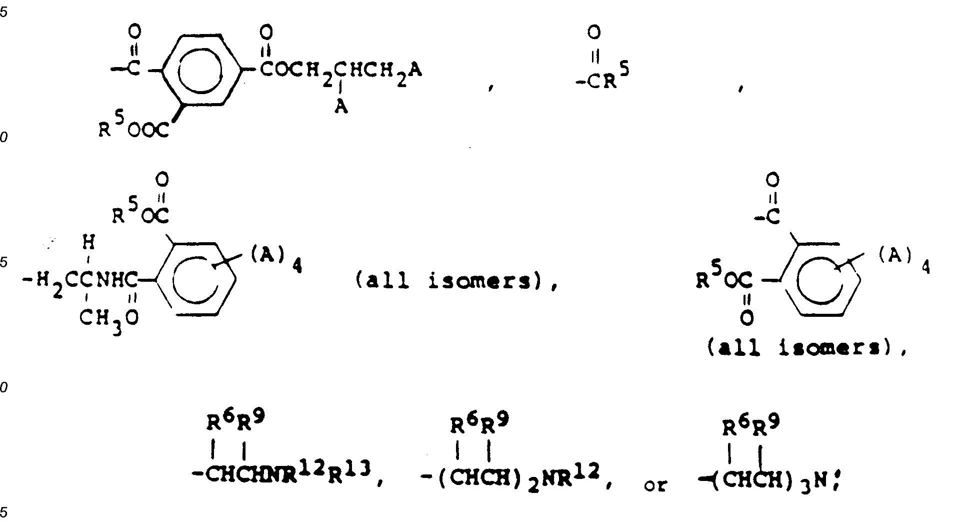
(m) R¹² is H or C₁₋₂₂ alkyl;
(n) R¹³ is H or C₁₋₂₂ alkyl;
(o) A is Cl or Br;
(p) B is halogen, OR⁵, or 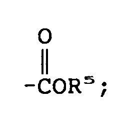
(q) G is 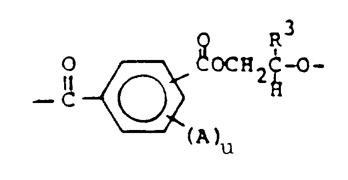
(r) X is O or NH;
(s) j is 0 to 1;
(t) k is 0 to 1, with the proviso that when j is 0 then k is 1 and when k is 0 then j is 1;
(u) m is 1 to 5;
(v) p is 0 or an integer of 1 to 50;
(w) q is an integer of 1 to 6;
(x) r is from more than 1 to 50; and
(y) u is 1 to 4.

5. The composition of claim 3, wherein the hydraulic fluids are selected from:
(A) mineral oils;
(B) poly-α-olefins having the general formula: 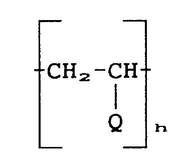 where h is 3 to 10 and Q is C₄₋₁₀ alkyl;
(C) cycloaliphatics in which an aliphatic hydrocarbon is substituted by at least one cycloalkyl;
(D) alkylated aromatics having the general formula: 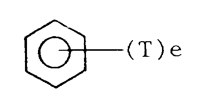 where T is linear C₁₀₋₁₄ alkyl and e is >1;
(E) esters of dibasic acids having the formula: 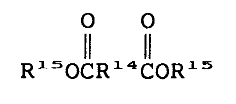 where R¹⁴ is C₄₋₈ alkylene and each R¹⁵ is independently C₈₋₁₃ alkyl;
(F) silicate esters having the formula:
(R¹⁶O)₄Si
where R¹⁶ is C₁₋₃₀ alkyl or C₆₋₁₄ aryl;
(G) polyol esters which are formed by reacting a diol or polyol with a C₅₋₁₀ monocarboxylic acid;
(H) polyglycols having the formula: 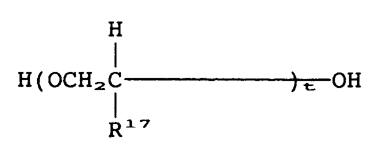 where R¹⁷ is H or C₁₋₃ alkyl and t is >1 to 50;
(I) phosphate esters having the formula:
O=P(OR¹⁸)₃
where R¹⁸ is independently C₁₋₃₀ alkyl, or C₆₋₂₂ aryl; and
(J) organohalides other than polyhaloaromatic esters in which a hydrocarbon contains one or more of F, Cl or Br.

6. The composition of claim 4, wherein the hydraulic fluids are selected from:
(A) mineral oils;
(B) poly-α-olefins having the general formula: 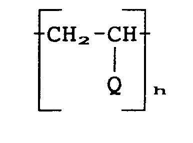 where h is 3 to 10 and Q is C₄₋₁₀ alkyl;
(C) cycloaliphatics in which an aliphatic hydrocarbon is substituted by at least one cycloalkyl;
(D) alkylated aromatics having the general formula: 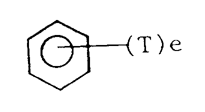 where T is a linear C₁₀₋₁₄ alkyl and e is >1;
(E) esters of dibasic acids having the formula: 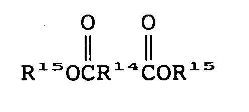 where R¹⁴ is C₄₋₈ alkylene and each R¹⁵ is independently C₈₋₁₃ alkyl;
(F) silicate esters having the formula:
(R¹⁶O)₄Si
where R¹⁶ is C₁₋₃₀ alkyl or C₆₋₁₄ aryl;
(G) polyol esters which are formed by reacting a diol or polyol with a C₅₋₁₀ monocarboxylic acid;
(H) polyglycols having the formula: 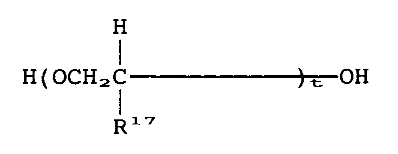 where R¹⁷ is H or C₁₋₃ alkyl and t is >1 to 50;
(I) phosphate esters having the formula:
O=P(OR¹⁸)₃
where R¹⁸ is independently C₁₋₃₀ alkyl, or C₆₋₂₂ aryl; and
(J) organohalides other than polyhaloaromatic esters in which a hydrocarbon contains one or more of F, Cl, or Br.

7. The composition of claims 2 to 6, wherein the polyhaloaromatic ester comprises at least 1 wt.-% of the total weight.

8. The composition of claims 1 and 3 to 6, wherein the polyhaloaromatic ester comprises at least 10 wt.-% of the total weight.

9. The composition of claims 1 and 3 to 7, wherein the polyhaloaromatic ester comprises at least 20 wt.-% of the total weight.

10. The composition of claim 4, wherein in said polyhaloaromatic ester
R is unsubstituted C₁₋₁₂ alkyl;
R³ and R⁴ are, independently, H, -CH₃, -CH₂Cl, -C₂H₅, -C₄H₉, or -C₈H₁₇;
R¹¹ is H or unsubstituted C₁₋₂₂ alkyl;
A is Br;
X is O;
u is 2 to 4;
p is 0 to 20;
q is 1 to 6; and
r is 0.10 to 5.

11. The composition of claim 4 or 6, wherein the polyhaloaromatic ester has the formula (I) and R is 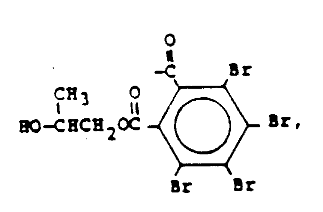 and q is 1.

12. The composition of claim 4 or 6, wherein said polyhaloaromatic ester has the formula (II) and
R³ and R⁴ are, independently, H, -CH₃, or -CH₂Cl;
u is 4;
q is 1; and
r is 0.25 to 2.

13. The composition of claim 5 or 6, wherein said hydraulic fluid is one or more of A, B, E, F, I, or J.

## Patentansprüche

1. Feuerbeständige hydraulische fluide Masse, dadurch **gekennzeichnet,** daß sie mindestens einen feuerbeständigen aromatischen Polyhalogenester und 0 bis 99 Gew.-% eines hydraulischen Fluids, ausgewählt aus:
(A) Mineralölen;
(B) Poly-α-olefinen;
(C) Cycloaliphaten;
(D) alkylierten Aromaten;
(E) Estern von zweibasischen Säuren;
(F) Silicatestern;
(G) Polyolestern;
(H) Polyglykolestern;
(I) Phosphatestern; und
(J) anderen organischen Halogenverbindungen als die aromatischen Polyhalogenester,
enthält.

2. Verwendung einer Masse, die mindestens einen feuerbeständigen aromatischen Polyhalogenester und 0 bis 99 Gew.-% eines hydraulischen Fluids, ausgewählt aus:
(A) Mineralölen;
(B) Poly-α-olefinen;
(C) Cycloaliphaten;
(D) alkylierten Aromaten;
(E) Estern von zweibasischen Säuren;
(F) Siliconen;
(G) Silicatestern;
(H) Polyesterfluiden;
(I) Polyglykolfluiden;
(J) Phosphatestern; oder
(K) anderen organischen Halogenverbindungen als die aromatischen Polyhalogenester,
enthält, als feuerbeständiges hydraulisches Fluid.

3. Masse nach Anspruch 1, dadurch **gekennzeichnet,** daß der aromatische Polyhalogenester ein Polyhalogenphthalatester ist.

4. Masse nach Anspruch 3, dadurch **gekennzeichnet,** daß der aromatische Polyhalogenester eine Verbindung der Formel: 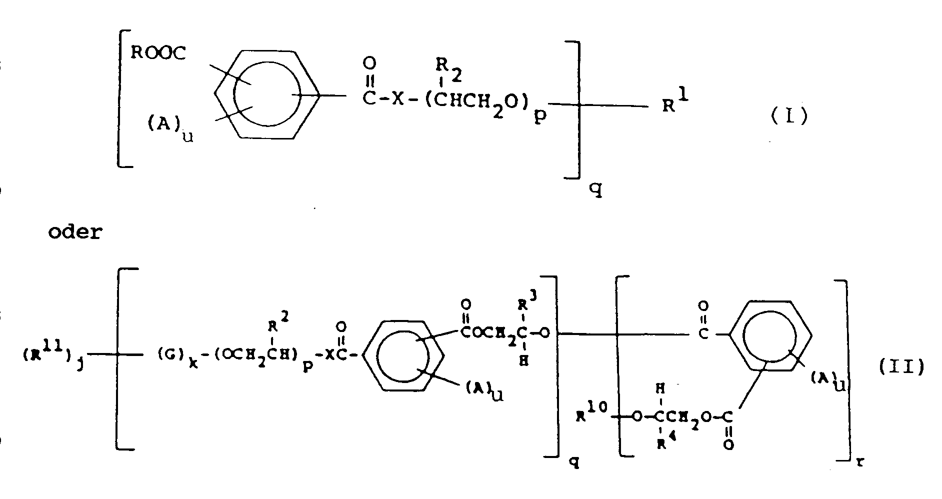 ist, worin
(a) die Ringe alle möglichen isomeren Anordnungen haben können;
(b) R für unsubstituiertes C₁₋₃₀-Alkyl, Hydroxy-C₂₋₂₀-alkyl, Polyhydroxy-C₃₋₁₀-alkyl oder 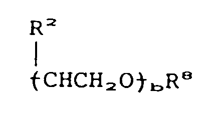 steht, worin R⁸ für unsubstituiertes C₁₋₁₈-Alkyl steht, R² wie untenstehend definiert ist und b 1 bis 50 ist;
(c) R¹ für H, verzweigtes oder lineares unsubstituiertes gesättigtes C₁₋₃₀-Alkyl oder ungesättigtes C₂₋₂₂-Alkyl oder 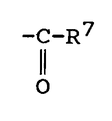 steht und R⁷ wie untenstehend definiert ist;
(d) R² unabhängig für H oder CH₃ steht;
(e) R³ und R⁴ unabhängig voneinander für H, C₁₋₁₈-Alkyl, Halogen-substituiertes C₁₋₁₈-Alkyl, -OH, OR⁵ oder 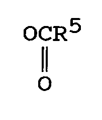 stehen;
(f) R⁵ für C₁₋₂₂-Alkyl steht;
(g) R⁶ für H oder C₁₋₂₂-Alkyl steht;
(h) R⁷ für C₁₋₁₈-Alkyl, Polyhydroxy-C₃₋₁₂-alkyl, 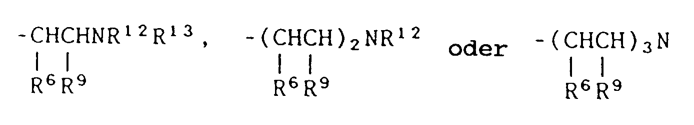 steht;
(i) R⁸ für verzweigtes oder lineares unsubstituiertes C₁₋₁₈-Alkyl steht;
(j) R⁹ für H oder C₁₋₂₂-Alkyl steht;
(k) R¹⁰ für H, 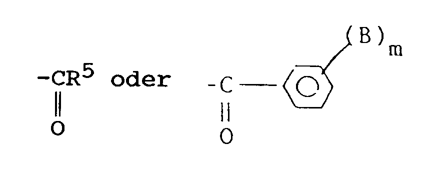 steht, worin B und m wie untenstehend definiert sind;
(l) R¹¹ für H, verzweigtes oder lineares unsubstituiertes C₁₋₃₀-Alkyl, Polyhydroxy-C₃₋₁₂-alkyl, 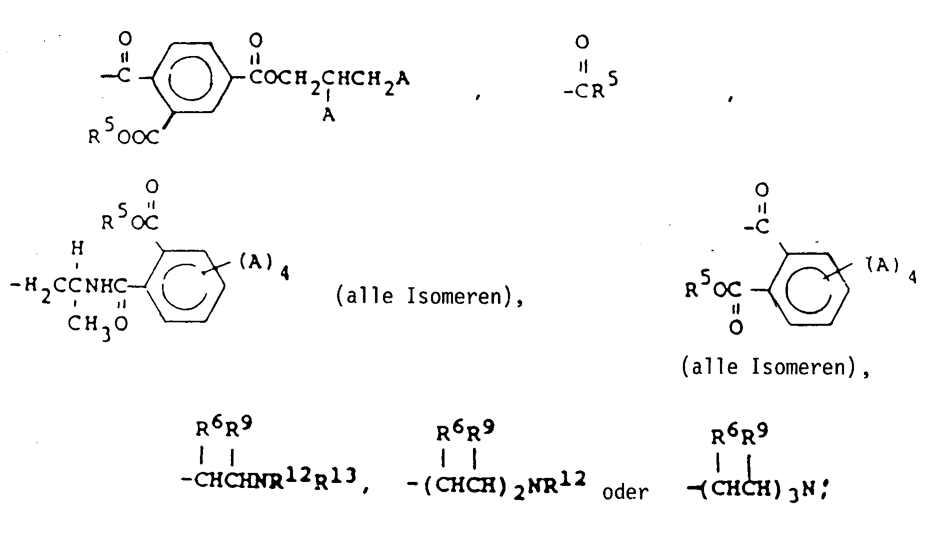 steht;
(m) R¹² für H oder C₁₋₂₂-Alkyl steht;
(n) R¹³ für H oder C₁₋₂₂-Alkyl steht;
(o) A für Cl oder Br steht;
(p) B für Halogen, OR⁵ oder 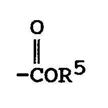 steht,
(q) G für 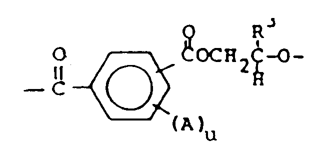 steht:
(r) X für O oder NH steht;
(s) j 0 bis 1 ist;
(t) k 0 bis 1 ist, mit der Maßgabe, daß, wenn j den Wert 0 hat, dann k den Wert 1 hat, und wenn k den Wert 0 hat, dann j den Wert 1 hat;
(u) m 1 bis 5 ist;
(v) p den Wert 0 hat oder eine ganze Zahl von 1 bis 50 ist;
(w) q eine ganze Zahl von 1 bis 6 ist;
(x) r mehr als 1 bis 50 ist; und
(y) u 1 bis 4 ist.

5. Masse nach Anspruch 3, dadurch **gekennzeichnet,** daß die hydraulischen Fluide aus:
(A) Mineralölen;
(B) Poly-α-olefinen mit der allgemeinen Formel: 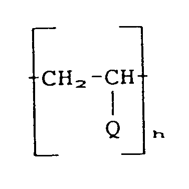 worin h 3 bis 10 ist und Q für C₄₋₁₀-Alkyl steht;
(C) Cycloaliphaten, bei denen ein aliphatischer Kohlenwasserstoff durch mindestens ein Cycloalkyl substituiert ist;
(D) alkylierten Aromaten mit der allgemeinen Formel: 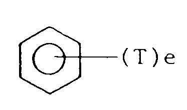 worin T für lineares C₁₀₋₁₄-Alkyl steht und e >1 ist;
(E) Estern von zweibasischen Säuren mit der Formel: 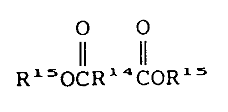 worin R¹⁴ für C₄₋₈-Alkylen steht und jedes R¹⁵ unabhängig C₈₋₁₃-Alkyl ist;
(F) Silicatestern mit der Formel:
(R¹⁶O)₄Si
worin R¹⁶ für C₁₋₃₀-Alkyl oder C₆₋₁₄-Aryl steht;
(G) Polyolestern, die durch Umsetzung eines Diols oder Polyols mit einer C₅₋₁₀-Monocarbonsäure gebildet worden sind;
(H) Polyglykolen mit der Formel: 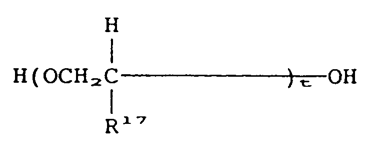 worin R¹⁷ für H oder C₁₋₃-Alkyl steht und t >1 bis 50 ist;
(I) Phosphatestern mit der Formel:
O=P(OR¹⁸)₃
worin R¹⁸ unabhängig für C₁₋₃₀-Alkyl oder C₆₋₂₂-Aryl steht; und
(J) anderen organischen Halogenverbindungen als die aromatischen Polyhalogenester, bei denen ein Kohlenwasserstoff ein oder mehrere von F, Cl oder Br enthält,
ausgewählt sind.

6. Masse nach Anspruch 4, dadurch **gekennzeichnet,** daß die hydraulischen Fluide aus:
(A) Mineralölen;
(B) Poly-α-olefinen mit der allgemeinen Formel: 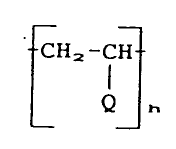 worin h 3 bis 10 ist und Q für C₄₋₁₀-Alkyl steht;
(C) Cycloaliphaten, bei denen ein aliphatischer Kohlenwasserstoff durch mindestens ein Cycloalkyl substituiert ist;
(D) alkylierten Aromaten mit der allgemeinen Formel: 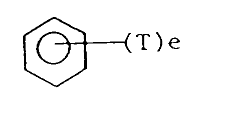 worin T für lineares C₁₀₋₁₄-Alkyl steht und e >1 ist;
(E) Estern von zweibasischen Säuren mit der Formel: 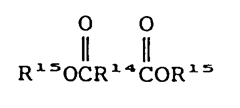 worin R¹⁴ für C₄₋₈-Alkylen steht und jedes R¹⁵ unabhängig C₈₋₁₃-Alkyl ist;
(F) Silicatestern mit der Formel:
(R¹⁶O)₄Si
worin R¹⁶ für C₁₋₃₀-Alkyl oder C₆₋₁₄-Aryl steht;
(G) Polyolestern, die durch Umsetzung eines Diols oder Polyols mit einer C₅₋₁₀-Monocarbonsäure gebildet worden sind;
(H) Polyglykolen mit der Formel: 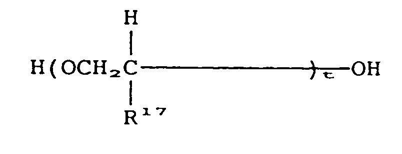 worin R¹⁷ für H oder C₁₋₃-Alkyl steht und t >1 bis 50 ist;
(I) Phosphatestern mit der Formel:
O=P(OR¹⁸)₃
worin R¹⁸ unabhängig für C₁₋₃₀-Alkyl oder C₆₋₂₂-Aryl steht; und
(J) anderen organischen Halogenverbindungen als die aromatischen Polyhalogenester, bei denen ein Kohlenwasserstoff ein oder mehrere von F, Cl oder Br enthält,
ausgewählt sind.

7. Masse nach den Ansprüchen 2 bis 6, dadurch **gekennzeichnet,** daß der Anteil des aromatischen Polyhalogenesters mindestens 1 Gew.-% des Gesamtgewichts beträgt.

8. Masse nach den Ansprüchen 1 und 3 bis 6, dadurch **gekennzeichnet,** daß der Anteil des aromatischen Polyhalogenesters mindestens 10 Gew.-% des Gesamtgewichts beträgt.

9. Masse nach den Ansprüchen 1 und 3 bis 7, dadurch **gekennzeichnet,** daß der Anteil des aromatischen Polyhalogenesters mindestens 20 Gew.-% des Gesamtgewichts beträgt.

10. Masse nach Anspruch 4, dadurch **gekennzeichnet,** daß bei dem aromatischen Polyhalogenester
R für unsubstituiertes C₁₋₁₂-Alkyl steht;
R³ und R⁴ unabhängig für H, -CH₃, -CH₂Cl, -C₂H₅, -C₄H₉ oder -C₈H₁₇ stehen;
R¹¹ für H oder unsubstituiertes C₁₋₂₂-Alkyl steht;
A für Br steht;
X den Wert 0 hat;
u 2 bis 4 ist;
p 0 bis 20 ist;
g 1 bis 6 ist; und
r 0,10 bis 5 ist.

11. Masse nach Anspruch 4 oder 6, dadurch **gekennzeichnet,** daß der aromatische Polyhalogenester die Formel (I) hat und daß
R für 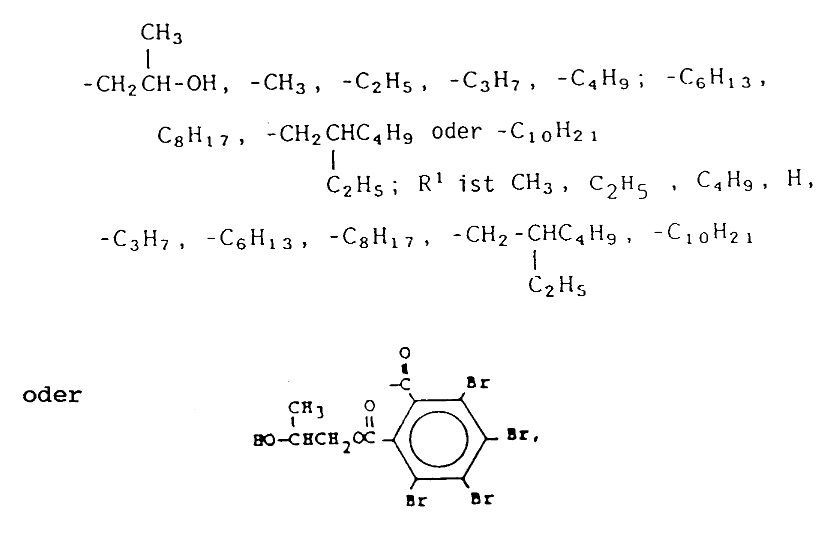 steht; und
q den Wert 1 hat.

12. Masse nach Anspruch 4 oder 6, dadurch **gekennzeichnet,** daß der aromatische Polyhalogenester die Formel (II) hat und daß
R³ und R⁴ unabhängig für H, -CH₃ oder -CH₂Cl stehen;
u den Wert 4 hat;
g den Wert 1 hat; und
r 0,25 bis 2 ist.

13. Masse nach Anspruch 5 oder 6, dadurch **gekennzeichnet,** daß das hydraulische Fluid ein oder mehrere von A, B, E, F, I oder J ist.

## Revendications

1. Composition de fluide hydraulique résistant au feu, comprenant au moins un ester polyhalogéno-aromatique résistant au feu et 0 % à 99 % en poids d'un fluide hydraulique choisi entre :
(A) des huiles minérales ;
(B) des poly-α-oléfines ;
(C) des composés cycloaliphatiques ;
(D) des composés aromatiques alkylés ;
(E) des esters de diacides ;
(F) des esters du type silicate ;
(G) des esters de polyols ;
(H) des esters de polyglycols ;
(I) des esters phosphoriques ; et
(J) des halogénures organiques autres que des esters polyhalogéno-aromatiques.

2. Utilisation d'une composition comprenant au moins un ester polyhalogéno-aromatique résistant au feu et 0 % à 99 % en poids d'un fluide hydraulique choisi entre :
(A) des huiles minérales ;
(B) des poly-α-oléfines ;
(C) des composés cycloaliphatiques ;
(D) des composés aromatiques alkylés ;
(E) des esters de diacides ;
(F) des silicones ;
(G) des esters du type silicate ;
(H) des fluides du type polyester ;
(I) des fluides du type polyglycol ;
(J) des esters phosphoriques ; et
(K) des halogénures organiques autres que des esters polyhalogéno-aromatiques,
comme fluide hydraulique résistant au feu.

3. Composition suivant la revendication 1, dans laquelle l'ester polyhalogéno-aromatique est un ester polyhalogénophtalique.

4. Composition suivant la revendication 3, dans laquelle l'ester polyhalogéno-aromatique est un composé de formule : 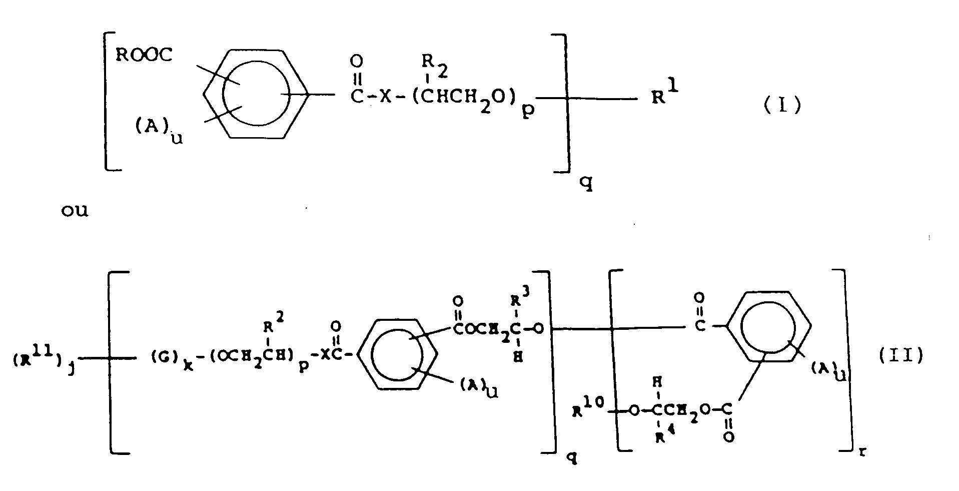 dans laquelle
(a) les noyaux peuvent posséder toutes les configurations isomériques possibles ;
(b) R représente un groupe alkyle en C₁ à C₃₀ non substitué, hydroxy-(alkyle en C₂ à C₂₀), polyhydroxy-(alkyle en C₃ à C₁₀) ou 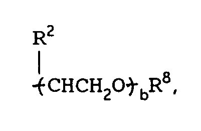 dans lequel R⁸ représente un groupe alkyle en C₁ à C₁₈ non substitué, R² répond à la définition mentionnée ci-dessous, et b a une valeur de 1 à 50 ;
(c) R¹ représente H, un groupe alkyle en C₁ à C₃₀ saturé ou alkyle en C₂ à C₂₂ insaturé, non substitué ramifié ou linéaire, ou un groupe 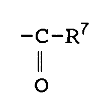 et R⁷ répond à la définition mentionnée ci-dessous,
(d) R² représente, indépendamment, H ou CH₃ ;
(e) R³ et R⁴ représentent, indépendamment, H, des groupes alkyle en C₁ à C₁₈, alkyle en C₁ à C₁₈ substitués avec un halogène, -OH, -OR⁵ ou 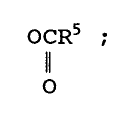
(f) R⁵ représente un groupe alkyle en C₁ à C₂₂ ;
(g) R⁶ représente H ou un groupe alkyle en C₁ à C₂₂ ;
(h) R⁷ représente un groupe alkyle en C₁ à C₁₈, polyhydroxy-(alkyle en C₃ à C₁₂), 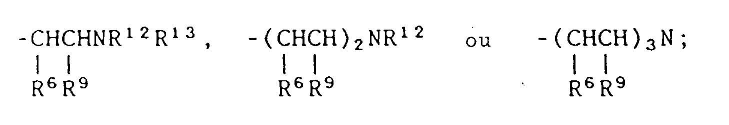
(i) R⁸ représente un groupe alkyle en C₁ à C₁₈ non substitué ramifié ou linéaire ;
(j) R⁹ représente H ou un groupe alkyle en C₁ à C₂₂ ;
(k) R¹⁰ représente H, un groupe 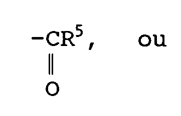 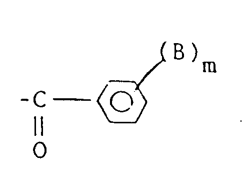 dans lequel B et m répondent aux définitions mentionnées ci-dessous ;
(l) R¹¹ représente H, un groupe alkyle en C₁ à C₃₀ non substitué ramifié ou linéaire, polyhydroxy-(alkyle en C₃ à C₁₂), 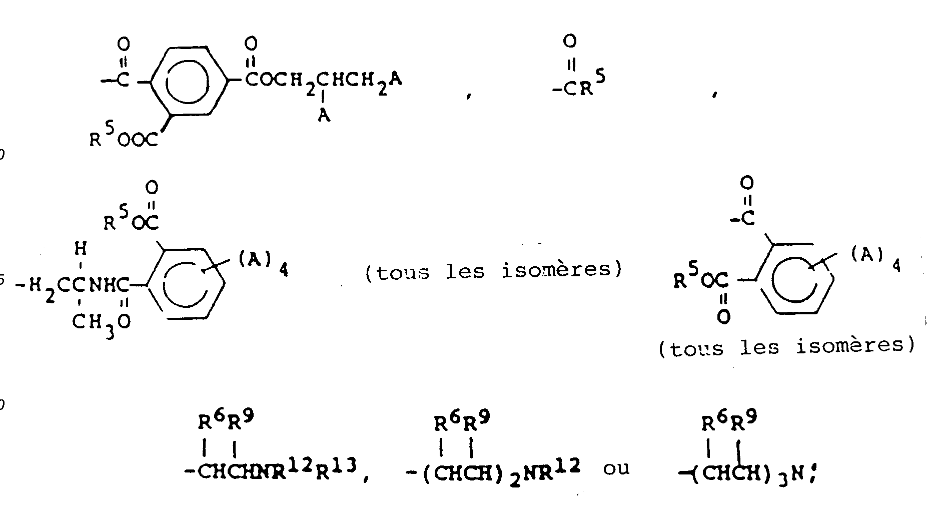
(m) R¹² représente H ou un groupe alkyle C₁ à C₂₂ ;
(n) R¹³ représente H ou un groupe alkyle C₁ à C₂₂ ;
(o) A représente Cl ou Br ;
(p) B représente un halogène, un groupe OR⁵ ou 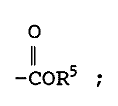
(q) G représente un groupe 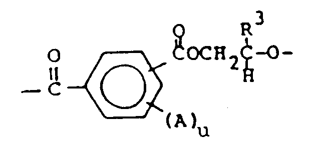
(r) X représente O ou un groupe NH ;
(s) j a une valeur de 0 à 1 ;
(t) k a une valeur de 0 à 1, sous réserve que, lorsque j est égal à 0, k soit alors égal à 1 et, lorsque k est égal à 0, j soit alors égal à 1 ;
(u) m a une valeur de 1 à 5 ;
(v) p est égal à 0 ou à un nombre entier de 1 à 50 ;
(w) q représente un nombre entier de 1 à 6 ;
(x) r a une valeur de plus de 1 à 50 ; et
(y) u a une valeur de 1 à 4.

5. Composition suivant la revendication 3, dans laquelle les fluides hydrauliques sont choisis entre :
(A) des huiles minérales ;
(B) des poly-α-oléfines répondant à la formule générale : 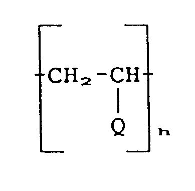 dans laquelle h a une valeur de 3 à 10 et Q représente un groupe alkyle en C₄ à C₁₀ ;
(C) des composés cycloaliphatiques dans lesquels un hydrocarbure aliphatique est substitué avec au moins un groupe cycloalkyle ;
(D) des composés aromatiques alkylés répondant à la formule générale : 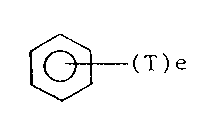 dans laquelle T représente un groupe alkyle linéaire en C₁₀ à C₁₄ et e est supérieur à 1 ;
(E) des esters de diacides répondant à la formule : 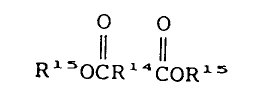 dans laquelle R¹⁴ représente un groupe alkylène en C₄ à C₈ et chaque groupe R¹⁵ représente indépendamment un groupe alkyle en C₈ à C₁₃ ;
(F) des esters du type silicate, répondant à la formule :
(R¹⁶O)₄Si
dans laquelle R¹⁶ représente un groupe alkyle en C₁ à C₃₀ ou aryle en C₆ à C₁₄ ;
(G) des esters de polyols qui sont formés par réaction d'un diol ou polyol avec un acide monocarboxylique en C₅ à C₁₀ ;
(H) des polyglycols répondant à la formule 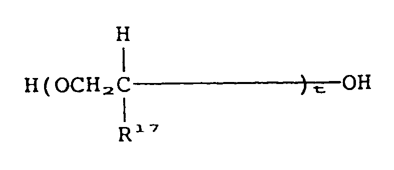 dans laquelle R¹⁷ représente H ou un groupe alkyle en C₁ à C₃ et t a une valeur >1 à 50 ;
(I) des esters phosphoriques répondant à la formule :
O=P(OR¹⁸)₃
dans laquelle R¹⁸ représente indépendamment un groupe alkyle en C₁ à C₃₀ ou aryle en C₆ à C₂₂ ; et
(J) des halogénures organiques autres que des esters polyhalogéno-aromatiques dans lesquels un hydrocarbure contient un ou plusieurs F, Cl ou Br.

6. Composition suivant la revendication 4, dans laquelle les fluides hydrauliques sont choisis entre :
(A) des huiles minérales ;
(B) des poly-α-oléfines répondant à la formule générale : 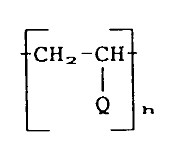 dans laquelle h a une valeur de 3 à 10 et Q représente un groupe alkyle en C₄ à C₁₀ ;
(C) des composés cycloaliphatiques dans lesquels un hydrocarbure aliphatique est substitué avec au moins un groupe cycloalkyle ;
(D) des composés aromatiques alkylés répondant à la formule générale : 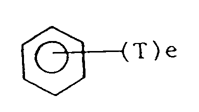 dans laquelle T représente un groupe alkyle linéaire en C₁₀ à C₁₄ et e est supérieur à 1 ;
(E) des esters de diacides répondant à la formule : 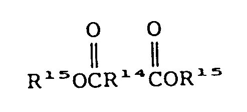 dans laquelle R¹⁴ représente un groupe alkylène en C₄ à C₈ et chaque groupe R¹⁵ représente indépendamment un groupe alkyle en C₈ à C₁₃ ;
(F) des esters du type silicate, répondant à la formule :
(R¹⁶O)₄Si
dans laquelle R¹⁶ représente un groupe alkyle en C₁ à C₃₀ ou aryle en C₆ à C₁₄ ;
(G) des esters de polyols qui sont formés par réaction d'un diol ou polyol avec un acide monocarboxylique en C₅ à C₁₀ ;
(H) des polyglycols répondant à la formule 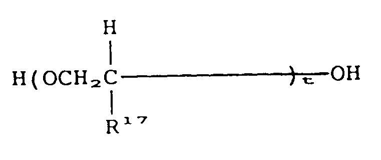 dans laquelle R¹⁷ représente H ou un groupe alkyle en C₁ à C₃ et t a une valeur >1 à 50 ;
(I) des esters phosphoriques répondant à la formule :
O=P(OR¹⁸)₃
dans laquelle R¹⁸ représente indépendamment un groupe alkyle en C₁ à C₃₀ ou aryle en C₆ à C₂₂ ; et
(J) des halogénures organiques autres que des esters polyhalogéno-aromatiques dans lesquels un hydrocarbure contient un ou plusieurs F, Cl ou Br.

7. Composition suivant les revendications 2 à 6, dans laquelle l'ester polyhalogéno-aromatique représente au moins 1 % en poids, sur la base du poids total.

8. Composition suivant les revendications 1 et 3 à 6, dans laquelle l'ester polyhalogéno-aromatique représente au moins 10 % en poids, sur la base du poids total.

9. Composition suivant les revendications 1 et 3 à 7, dans laquelle l'ester polyhalogéno-aromatique représente au moins 20 % en poids, sur la base du poids total.

10. Composition suivant la revendication 4, dans laquelle, dans l'ester polyhalogéno-aromatique
R représente un groupe alkyle non substitué en C₁ à C₁₂ ;
R³ et R⁴ représentent, indépendamment, H, des groupes -CH₃, -CH₂Cl, -C₂H₅, -C₄H₉ ou -C₈H₁₇ ;
R¹¹ représente H ou un groupe alkyle non substitué en C₁ à C₂₂ ;
A représente Br ;
X représente O ;
u a une valeur de 2 à 4 ;
p a une valeur de 0 à 20 ;
q a une valeur de 1 à 6 ; et
r a une valeur de 0,10 à 5.

11. Composition suivant la revendication 4 ou 6, dans laquelle l'ester polyhalogéno-aromatique répond à la formule (I) et R représente un groupe 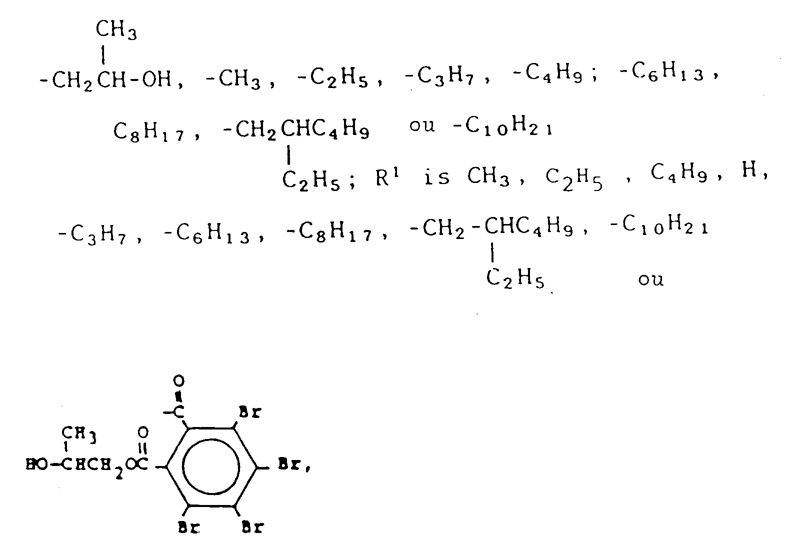 et q est égal à 1.

12. Composition suivant la revendication 4 ou 6, dans laquelle l'ester polyhalogéno-aromatique répond à la formule (II) et
R³ et R⁴ représentent, indépendamment, H, des groupes -CH₃ ou -CH₂Cl ;
u est égal à 4 ;
q est égal à 1 ; et
r a une valeur de 0,25 à 2.

13. Composition suivant la revendication 5 ou 6, dans laquelle le fluide hydraulique consiste en un ou plusieurs des constituants A, B, E, F, I et J.
